(19) Europäisches Patentamt
European Patent Office
Office européen des brevets

(11) Veröffentlichungsnummer : **0 040 729**
**B1**

(12) # EUROPÄISCHE PATENTSCHRIFT

(45) Veröffentlichungstag der Patentschrift : **09.07.86**

(51) Int. Cl.⁴ : **C 08 K 9/02**, C 08 J 3/22, C 08 L 21/00

(21) Anmeldenummer : **81103501.3**

(22) Anmeldetag : **08.05.81**

(54) **Granulatförmige Pulveragglomerate und ein Verfahren zu deren Herstellung.**

(30) Priorität : **20.05.80 DE 3019232**

(43) Veröffentlichungstag der Anmeldung : **02.12.81 Patentblatt 81/48**

(45) Bekanntmachung des Hinweises auf die Patenterteilung : **09.07.86 Patentblatt 86/28**

(84) Benannte Vertragsstaaten : **BE DE FR GB IT NL**

(56) Entgegenhaltungen :
**GB-A- 1 003 470**
**JOURNAL OF POWDER AND BULK SOLIDS TECHNOLOGY, Band 4, Nr. 4, 1980, publiziert Oktober-Dezember 1980, International Powder Institute, Chicago, Illinois, USA R. FRIEDRICH: "Powder compression with co-rotating twin-screw extruders"**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Lindner, Wolfgang, Dr.**
**Gneisenau Strasse 15 A**
**D-4047 Dormagen (DE)**
Erfinder : **Arend, Günter, Dr.**
**Claudiusstrasse 42**
**D-4047 Dormagen (DE)**
Erfinder : **Barnikel, Claus-Dieter, Dr.**
**Rybniker Strasse 10**
**D-5000 Köln 80 (DE)**
Erfinder : **Frauenkron, Günter, Ing. Grad.**
**Koelner Strasse 133**
**D-5093 Burscheid 2 (DE)**

**EP 0 040 729 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung bezieht sich auf granulatförmige Agglomerate von pulverförmigen Kautschukchemikalien, kurz Granulen oder Granulate genannt, sowie auf deren Herstellung mittels Doppelwellenschneckengranulatoren.

Kautschuk-Chemikalien mit Schmelzpunkten unterhalb 90 °C werden vorzugsweise in aus der Schmelze gewonnenen Lieferformen (z. B. stückige Granulate, Schuppen, Pastillen etc.) hergestellt. Solche mit Schmelzpunkten über 90 °C werden als reine oder beölte Pulver, ferner als Granulate mit Durchmessern größer gleich 6 mm oder auch als Mikrogranulat mit Durchmessern kleiner gleich 1 mm, wie es bei der bekannten Sprühtrocknungstechnologie anfällt, angeboten.

Generell gesehen bietet sich zum Agglomerieren von pulverigen Stoffen die Aufbaugranulations-, die Preßagglomerations- oder Trocknungsagglomerationstechnik an.

Für die Aufbaugranulationstechnik benutzt man so. z. B. die Rollgranulierung mittels Teller, Trommel, Konus, Band oder Vibration, die Mischgranulierung mittels Tellermischer, Mischtrommel oder Schneckenmischer, die Fließbettgranulation, und die Granulation in Flüssigkeiten.

Der bekannteste apparative Vertreter der Trocknungsagglomerationstechnik ist der Sprühtrockner. Die auf dem Markt erhältlichen Apparate zur Durchführung dieser Agglomerationstechniken sind ausführlich in einer Übersichtsveröffentlichung in der Zeitschrift Aufbereitungstechnik (Nr. 3 (1970), S. 147 ff), zusammengestellt.

Die Verfahren der Aufbaugranulations- und der Trocknungsgranulationstechnik erzeugen systemimmanent sphärische Granulate mit einem breiten Korngrößenspektrum, so daß sie einen relativ großen Anteil an rückgeführtem Produkt besitzen. Darüber hinaus besitzen sie im Falle von staubexplosionsgefährdeten Stoffen den Nachteil, daß besondere Vorkehrungen zur Verhinderung von Staubexplosionen getroffen werden müssen. Abgesehen von den Kosten können damit auch qualitätsbezogene Nachteile (z. B. im Falle von selbstinertisierenden Sprühtrocknern durch Rückführung von vercrackten Produkten) verbunden sein. Aus den genannten Gründen empfiehlt sich für die Endformulierung von pulverigen Stoffen die Preßagglomerationstechnik. Die Kompaktiertechnologie mittels Kompaktierpressen und Brikettpressen müssen ebenso dazugezählt werden wie das Lochpreßverfahren. Werden Kautschuk-Chemikalien mittels der Kompaktier- und Brikettiertechnologie agglomeriert, so erhält man derart feste Granulen, daß sie bei dem weiter unten beschriebenen Einmischtest versagen. Dies bedeutet, jede erfolgreiche Agglomerationstechnik für Kautschukchemikalien muß in einem Preßkraftbereich arbeiten, daß auch im mikroskopischen Bereich keine wärmereduzierte Sinterung der Primärkörner zustandekommt.

Mit den bekannten Verfahren und Vorrichtungen, die auf dem Schneckenpressenprinzip aufbauen (z. B. Industriewolf der Fa. Alexanderwerke, Extruktor der Fa. Rietz), gelingt dies prinzipiell nur dann, wenn die zu agglomerierenden Produkte relativ stark pastös sind und Agglomerate mit Durchmessern größer als 4 mm hergestellt werden sollen. Diese einwelligen Schneckenmaschinen versagen jedoch dann, wenn relativ trockenes Pulver mit nur geringen Bindemittelzusätzen zu Granulen mit kleinen Durchmessern (1 bis 4 mm) hergestellt werden sollen. Ein Grund für ihr Versagen ist das unzureichende Einzugsvermögen von einwelligen Schneckenmaschinen für Pulver beim Fördern gegen Druck. Stellt man die zu granulierenden Pulver mittels Flüssigkeiten oder Bindemitteln pastöser ein, so existiert ein meist sehr enger Bereich, innerhalb dessen man das Produkt strangpressen kann. Wegen der engen, einzuhaltenden Toleranzgrenzen ist eine ausreichende Betriebssicherheit jedoch nicht gewährleistet. Auch sind die für Kautschuk-Chemikaliengranulate geforderten physikalischen Eigenschaften wie z. B. Einmischbarkeit, Staubanteil, Granulatfestigkeit oder Rieselfähigkeit nicht mit hinreichender Sicherheit einzustellen.

Um ein vernünftiges Verhältnis von Maschinenvolumen zu Durchsatz zu erzielen, müssen die Strangpressen eine möglichst große Anzahl von Düsenbohrungen pro Düsenplatte haben. Als Faustregel kann gelten, daß, je kleiner der Strangdurchmesser ist, desto größer die Anzahl der Düsenbohrungen je Platte sein muß. Dies bedeutet, daß zwangsweise viele der auf dem Umfang der Düsenplatte liegenden Bohrungen übereinanderliegen müssen. Ist nun das Produkt zu pastös eingestellt, tritt es in Form von « Spaghettis » aus den Düsenbohrungen aus, im Extremfall sogar als Endlosstrang. Beide Strangformen sind naturgemäß sehr weich, das Extrudat verklebt miteinander, so daß keine diskreten Granulen erhalten werden können. Auch eine Schneidvorrichtung, wie z. B. ein rotierendes Messer bringt keinen Vorteil. Da die Stränge an den Schnittflächen zum Verschmieren neigen, kommt es vielmehr zu starken Deformationen und vermehrtem Verkleben der Granulen.

Zur Herstellung von im Durchmesser monodispersen Granulenmengen von Kautschukchemikalien eignen sich also nach dem Stand der Technik bisher nur die sogenannten Brikettkompaktierpressen und einige Lochpressen (z. B. Zahnradlochwalzen), nicht aber die bekannten Schneckenpressen.

Granulen von Kautschukchemikalien müssen eine Vielzahl von physikalischen wie chemischen Eigenschaften erfüllen, um praxisgerecht eingesetzt werden zu können. Als wichtigste dieser Eigenschaften seien beispielsweise genannt :

a) möglichst hoher Wirkstoffgehalt, der durch Spezifikationen wie Gehaltsanalysen, Glührückstand, unlösliche Anteile in diversen Lösungsmitteln oder spektroskopische Methoden garantiert werden kann ;

b) hervorragende Einmischbarkeit in Kautschukfelle ;

c) möglichst geringer Staubanteil (arbeitshygienischer Gesichtspunkt) ;

d) geringer Feingutanteil des gerade extrudierten Granulates ;

e) gute Festigkeit der Granulen, welche den Verpackungsprozeß, Transport- und Fördervorgänge bis hin zur Verarbeitungsstelle ohne störenden Zerfall überstehen müssen ;

f) gute Rieselfähigkeit zum einfachen Dosieren beim Abfüllen und Verarbeiten.

In vielen Fällen ist eine staubfreie Granulatform Voraussetzung für einen kostengünstigen und sicherheitstechnisch beherrschbaren Trocknungsprozeß (Staubexplosionsgefahr).

Dies definierte Eigenschaftsprofil weist keine der bisher bekannten Kautschukchemikaliengranulate auf. Mit den oben näher beschriebenen Brikettier- und Lochpressen ist ein solches Eigenschaftsbild für Kautschukchemikaliengranulate nicht zu erzielen, insbesondere die Kombination einer guten Einmischbarkeit einerseits und einer hohen Granulatfestigkeit andererseits ist hier besonders problematisch. Über Brikettier- oder Lochpressen hergestellte Granulate sind oberflächlich häufig zusammengesintert und damit viel zu hart.

Im folgenden sind die zuvor beschriebenen Größen, welche die Eigenschaften von Kautschukchemikalien im wesentlichen bestimmen, meßtechnisch definiert.

a) Die Bestimmung des Wirkstoffgehaltes von Kautschukchemikalien ist, vom Substanztyp abhängig, ein Problem der organisch- bzw. anorganischchemischen Analyse und meist literaturbekannt. Über die Spezifikationen im einzelnen existieren darüber hinaus häufig Sonderabsprachen zwischen Produzent und Kunde, so daß hier keine speziellen Angaben gemacht werden können.

b) Die Einmischtestbeurteilung (EMT-Wert) erfolgt anhand eines Versuches mit anschließender visueller Beurteilung der Verteilung. In Anlehnung an die Produktionsverarbeitung wird ein Naturkautschuk (Defohärte 1000) in einem auf 40-50 °C beheizten Friktionswalzenpaar zu einem Walzenfell ausgezogen. Man gibt 10 %, bezogen auf die Gesamtmischung der zu testenden Kautschukchemikalien, in den Walzenspalt und wartet, bis diese sich über das Walzenfell verteilt haben, die Zeit hierfür ist z. B. abhängig von der Grobstruktur der Chemikalien, die Temperatur des Walzenfells steigt durch die mechanische Friktionsbeanspruchung bis ca. 80 °C an. Durch sechsmaliges Stürzen und Wenden des Walzenfells wird der Mischprozeß vervollständigt, und das Fell wird zu Puppen ausgerollt. Der gesamte Mischprozeß dauert etwa 3 bis 4 Minuten. Die Puppen werden nun an mehreren Stellen zerschnitten, die Schnittfläche wird visuell beurteilt. Die Bewertung erfolgt in Noten von 0 bis 3, die nachstehend definiert sind :

0 : keine Stippen sichtbar
0,5 : eben sichtbare, kleine Stippen
1 : wenige, kleine Stippen
1,5 : viele kleine oder einige größere Stippen
2 : große Stippen
3 : dicke, große Stippen

Optimal ist EMT = 0, toleriert wird noch EMT = 1,5.

c) Der Staubanteil wird in einem Staubmeßgerät nach Cassella bestimmt. Bei dieser Prüfung werden 10 g Granulat aus 70 cm Höhe durch ein Rohr von 5,5 cm Innendurchmesser in einen würfelförmigen, schwarzen Metallbehälter fallengelassen und die Extinktion eines quer zur Fallrichtung verlaufenden Lichtstrahls gemessen (Skala 0 bis 100 %). Die Staubzahl ist die Summe aus der maximalen Extinktion, die sofort nach dem Herunterfallen des Materials durch den aufgewirbelten Staub verursacht wird, plus der nach 30 Sekunden noch verbleibenden Extinktion. Als Limit für Mikrogranulate wird in Anlehnung an Praxiserfahrung die « Staubzahl » 10 festgelegt, gute Granulate sollten eine Staubzahl von kleiner als 5 aufweisen.

d) Zur Bestimmung des Feingutanteiles werden ca. 500 g feuchtes Granulat direkt an den Düsenöffnungen mittels eines Trockenbleches entnommen. Das Produkt wird bei 50 °C im Vakuum getrocknet und anschließend unter leichtem Schütteln durch ein Normsieb mit 1 mm Maschenweite gesiebt. Den durchgesiebten Anteil, ausgedrückt in Prozent, bezeichnen wir als Feingutanteil des Granulates. Dieser Anteil sollte unter 5 %, möglichst unter 3 % liegen.

e) Die Granulatfestigkeit wird im Falltest ermittelt. 100 g des Granulatsiebrückstandes aus der Bestimmung des Feingutanteils werden in einer 250 ml Plastikrundflasche 100 mal aus 1 m Höhe fallengelassen. Man bestimmt erneut, wie bei d) beschrieben, den Feingutanteil auf einem 1 mm-Normsieb. Die durchgesiebte Menge in Gramm dient in Gestalt der dimensionslosen Zahl als Maß für die Granulatfestigkeit. Als Obergrenze für ausreichend stabile Granulate wird ein Festigkeitswert von 70, bevorzugt werden Werte unter 50, sehr feste Granulate erreichen Festigkeitswerte unter 30.

Alle bisher bekannten Granulatformen erfüllen dies nach dem Bedarf der Verarbeitungspraxis definierte Eigenschaftsprofil nur teilweise. Sprühgetrocknete Mikrogranulate bestehen nur schwierig den Staubwerttest und sind daher oft nur unter besonderen arbeitshygienischen Vorkehrungen zu verarbeiten. Makrogranulate mit mehr als 6 mm Durchmesser benötigen einen langwierigen Trocknungsprozeß. Sie sind nur in längeren Mischzeiten einmischbar, da die großen Granulen nur schwierig von den Verarbeitungswalzen eingezogen werden. Dies bedingt längere Verarbeitungszeiten oder eine schlechte Einmischung der Kautschukchemikalien.

Der aus anwendungstechnischer Sicht als optimal betrachtete Granulatdurchmesserbereich beträgt 1 bis 6 mm, bevorzugt bis 4 mm. Granulate dieser Größe mit einem durchgehend befriedigenden Eigenschaftsprofil sind bisher nicht zugänglich. Zu ihrer Herstellung erscheinen nur Schneckenpressenmaschinen als brauchbare Geräte. Wie bereits ausgeführt, sind Einwellenschneckenmaschinen zur Granulierung wenig geeignet. Eine Zweiwellenschneckenpulvergranuliermaschine der japanischen Firma Fuji Paudal brachte ebenfalls keine guten Ergebnisse. Bei diesem Maschinentyp wird das verdichtete Pulver wahlweise radial oder axial durch Düsenlöcher extrudiert, zudem muß das Feuchtgut vor dem Granulieren durch Kneten, z. B. auf Friktionswalzenknetern, gleitfähig eingestellt werden. Das mit dieser Maschine erhaltene Granulat weist eine nur unbefriedigende Festigkeit (Festigkeitswert im Falltest : > 70) und einen hohen Feingutanteil auf. Beim Versuch, eine höhere Pulverkompression einzustellen, sank die Durchsatzmenge der Maschine rasch ab, es wurde kein gut ausgebildetes Granulat mehr erhalten.

Es wurde nun überraschend gefunden, daß man Granulate von Kautschukchemikalien, welche dem zuvor definierten Eigenschaftsbild entsprechen, erhalten kann, indem man feuchte Kautschukchemikalienpulver, welche durch Zusatz eines Anfeuchtungsmittels und/oder Gleitmitteln gleitfähig eingestellt sind, in einem Zweiwellenextruder unter Aufwendung von spezifischen Granulierarbeiten von 2 bis 40 Wh/kg durch eine Düsenplatte extrudiert.

Die Erfindung betrifft somit granulatförmige, nichtstaubende Agglomerate von pulverförmigen Kautschukchemikalien, welche eine Primärkorngröße von maximal 500 µm, vorzugsweise von maximal 300 µm und einen Wirkstoffgehalt von mindestens 90 Gew.-%, vorzugsweise mindestens 95 Gew.-% aufweisen und eine Bewertung im Einmischtest von höchstens 1,5, vorzugsweise 0-1, im Staubanteil von höchstens 10, vorzugsweise höchstens 5 ; im Feingutanteil von höchstens 5, vorzugsweise höchstens 3, und im Falltest von höchstens 70, vorzugsweise höchstens 50, erreichen. Zu ihrer Herstellung verwendet man einen Zweiwellenschneckengranulator mit Zwangsförderung, bei dem der Abstand zwischen Düsenplatte und senkrecht geschnittenem Schneckenende zwischen 0 und 1,6, vorzugsweise zwischen 0,1 und 1,0 mm beträgt, wobei das Kompressionsverhältnis $K_D$ zwischen 1 : 6 und 1 : 1,5 und vorzugsweise zwischen 1 : 4,5 und 1 : 2,5 und das Verhältnis Düsenkanallänge zu Durchmesser zwischen 1 und 6, vorzugsweise zwischen 2 und 5 liegt und spezifische Granulierarbeiten von 2 bis 40, vorzugsweise 5 bis 30 Wh/kg aufgebracht werden.

Das Granulat wird an den Schneckenenden axial durch eine Düsenlochplatte gepreßt, die austretenden Stränge werden auf eine gewünschte Länge abgeschnitten, oder man läßt sie durch die eigene Schwerkraft abbrechen. Die Granulateigenschaften werden nach dem Trocknen bestimmt.

Eine mechanische Vorbehandlung des feuchten Pulvers vor dem Granulieren ist nicht erforderlich. Das zum Einstellen einer ausreichenden Gleitfähigkeit benötigte Anfeuchtungsmittel, bzw. das gegebenenfalls benötigte Gleitmittel, wird in einem handelsüblichen Mischer dem Feuchtpulver zugemischt. Die Einmischung der Komponenten kann natürlich auch in dem Granulierextruder erfolgen, in diesem Fall ist es zweckmäßig, die Schneckenwellen mit Mischelementen zur besseren Homogenisierung auszustatten.

Der einzustellende Feuchteanteil des Pulvers liegt zwischen 5 und 50 Gew.-%, bevorzugt zwischen 10 und 40 Gew.-%, bezogen auf die Gesamtmischung, in Abhängigkeit vom jeweiligen Substrat ; der Anteil an Gleitmittel beträgt 0 bis 5 Gew.-%, bevorzugt 0 bis 2 Gew.-%, bezogen auf den Feststoffanteil.

Die Menge des benötigten Anfeuchtungsmittels sowie des Gleitmittels richten sich nach der einzustellenden Gleitfähigkeit des Pulvers ; diese wird so gewählt, daß für den Formgebungsprozeß eine spezifische Arbeit von 2 bis 40, vorzugsweise von 5 bis 30 Wh/kg zur Verfügung steht. Da die Gleitfähigkeit des Trockenpulvers im wesentlichen von der Kristallstruktur und der Primärkorngröße des jeweiligen Substrates abhängt, läßt sich ein allgemeingültiger Feuchte- und Gleitmittelgehalt nicht angeben. Es ist durchaus möglich, Trockenpulver allein in Gegenwart von Gleitmitteln zu granulieren. Genauso kann man auf den Zusatz von Gleitmitteln verzichten und das Feuchtgut ohne weitere Additivzusätze nur in Gegenwart von Wasser granulieren. Anstelle von Wasser lassen sich auch andere benetzende, nichtlösend wirkende Flüssigkeiten zur Herstellung eines die Reibung verringernden Grenzflächenfilms, wie beispielsweise Alkohole, Toluol, Chlorbenzol, Dioxan oder aliphatische Chlorkohlenwasserstoffe, einsetzen. Wasser ist jedoch das bevorzugte Medium zum Anfeuchten, da Kautschukchemikalien in der überwiegenden Mehrzahl in wäßrigen Systemen hergestellt werden.

Darüber hinaus stellt die Granulatform von 1 bis 6 mm Durchmesser der Kautschukchemikalien eine für die meisten Trocknungsverfahren optimale Konfektionierungsform dar. Feinere Agglomerate bzw. Pulver neigen zur Staubbildung mit allen damit verbundenen sicherheitstechnischen und arbeitshygienischen Risiken, größere Granulate erfordern längere Trocknungszeiten.

Das Gleitmittel hat die Aufgabe, die Reibung der Einzelkristalle aneinander durch Ausbildung eines Grenzflächenfilms zu vermindern. Im allgemeinen erfordern Produkte mit geringer durchschnittlicher Primärkorngröße einen kleinen Gleitmittelanteil. Bei zunehmend grober werdendem Korn muß auch mehr Gleitmittel eingesetzt werden. Abhängig von der Düsenlochgröße ist eine Kompaktierung von Kautschukchemikalien bis zu einer mittleren Korngröße von 500 µm durchführbar, der Gleitmittelanteil muß dann jedoch bis 5 Gew.-%, vorzugsweise bis 3 Gew.-%, betragen. Nach untenhin ist die mittlere Korngröße nicht begrenzt. Sie wird in der Praxis jedoch dadurch begrenzt, daß eine ausreichende Filtrierbarkeit des Produktes gegeben sein muß. Sehr feinkörnige Kautschukhilfsmittel (durchschnittliche Primärkorngröße unter 5 µm) halten viel Wasser im Filterkuchen fest. Dieser Pulverfeuchteanteil ist für den beschriebenen Granuliervorgang oftmals zu groß, das Material läßt sich nicht ausreichend kompaktieren. In solchen Fällen ist eine Vorentwässerung in einem zusätzlichen Verfahrensschritt oder aber die Rückvermischung von feuchtem und bereits getrockneten Pulver notwendig. Eine Granulierung von Kautschukchemikalien ist somit möglich im durchschnittlichen Primärkorngrößenbereich zwischen 0,1 und 500 μm, bevorzugt wird der Bereich zwischen 5 und 300 μm.

Grobkörnigere kristalline Substanzen können durch Mahlen auf die zur Granulierung erforderliche optimale Korngröße zerkleinert werden. Denselben Effekt hat ein Knetprozeß an dem feuchten, grobkörnigen Material. Das Kneten kann in handelsüblichen Maschinen, auf einem gegebenenfalls mit Friktion laufenden Walzenpaar oder an zusätzlich in den Granulierextruder eingebauten Knetelementen erfolgen. Ein solcher Kneteffekt ist für feinkörnige Kautschukchemikalien mit Primärkorngrößen von unter ca. 30 μm meist nachteilig.

Solche Produkte fallen, wie bereits ausgeführt, mit hoher Filterrestfeuchte an, beim Knetvorgang kommt es oft zu Thioxotropie — oder seltener zu Entwässerungserscheinungen. Im ersten Falle wird das Material so gleitfähig, daß eine ausreichende spezifische Granulierarbeit nicht aufgebracht werden kann. Im zweiten Fall wird die Granulierarbeit zu groß, das Produkt wird zu stark kompaktiert, evtl. kann die Maschine zum Stillstand kommen. Es ist ein Vorteil des beschriebenen Granulierverfahrens, daß auf einen Knet- oder Plastifizierschritt in der Produktvorbehandlung verzichtet werden kann. Auf diese Weise gelingt es, die Granulierung auch die feinkörnigen Materialien ohne eine verfahrenstechnisch schwierig zu realisierende thermische Vortrocknung durchzuführen. Eine Vorplastifizierung bringt nur dann Vorteile, wenn ein Feuchtpulver mit sehr geringer Restfeuchte vorliegt, welches direkt, ohne Anfeuchtungszusatz, granuliert werden soll. Dieser Fall kommt in der Praxis jedoch nicht vor, die auf üblichen Filtrationsgeräten zu erreichenden Restfeuchten erlauben nur eine Granulierung ohne Vorplastifizierung.

Geeignete Gleitmittel gehören den unterschiedlichsten Verbindungsklassen an. Sie müssen chemisch gegenüber den jeweiligen Kautschukhilfsmitteln inert sein. Durch ihren Einsatz sollten die Gebrauchs- und Vulkanisationseigenschaften der Hilfsmittel möglichst wenig beeinflußt werden. Zum Beispiel dürfen Gleitmittel nicht stark hygroskopisch sein und nur einen geringen Gehalt an Metallkationen enthalten. Aus diesem Grund sind beispielsweise sulfatierte Emulgatoren als Gleitmittel nur wenig geeignet. Bevorzugte Gleitmittel zur Herstellung der erfindungsgemäßen Pulveragglomerate sind unter anderem :

Mineralöle und Wachse wie Paraffinwachs oder Carnaubawachs ; Polyäther wie Polypropylenglykole oder Polybutandiole ; Polyester wie beispielsweise Desmophen® 800, sowie Polyvinylalkohol und Silikonöle. Besonders bevorzugte Gleitmittel stellen äthoxylierte und/oder propoxylierte Phenole bzw. aliphatische Alkohole oder Fettsäuren dar, wie beispielsweise Triethylenglykolmonolaurylether, Pentaethylenglykolmonolaurylether, Oktaethylenglykolmonostearylether, Tetraethylenglykolmonononylether, Hexaethylenglykolmonononylphenylether, Hexaethylenglykolmonostearat, Oktaethylenglykolomonooleat, Oktadecaethylenglykolmonooleat, Dodekaethylenglykoldistearat, Additionsprodukte von Ethylenoxid und/oder Propylenoxid an Zucker oder Additionsprodukte von Propylenoxid an Kokosfett in Emulsion mit Wasser. Als Gleitmittel gut geeignet, wegen ihres Salzgehaltes jedoch nicht bevorzugt verwendet, sind beispielsweise folgende Verbindungen : Ölsäure-N-methyltaurid, Ölsäureoxiethansulfonat, Alkylsulfonate oder Alkylsulfate.

Die spezifische Granulierarbeit $A_{spez.}$ ist die für die Granulierung von 1 kg Feuchtpulver aufzuwendende mechanische Energie. Trägt man in einem Diagramm z. B. die elektrische Leistungsaufnahme des Granuliermaschinenantriebes in Watt gegenüber der entsprechenden Durchsatzleistung (Dimension : kg/h) auf, so erhält man die spezifische Granulierarbeit bei einem bestimmten Durchsatz als Steigung der Kurve im betreffenden Punkt. Im bevorzugten Arbeitsbereich zur Herstellung der erfindungsgemäßen Granulen ist die Abhängigkeit linear, die spezifische Granulierarbeit also konstant :

$$N_{elektr.} = A_{spez.} \cdot D + A_o$$

$N_{elektr.}$ = elektrische Leistungsaufnahme des Granulators
$A_{spez.}$ = spezifische Granulierarbeit
D = Durchsatzleistung des Granulators
$A_o$ = Ordinatenabschnitt im Diagramm, entspricht der Nullpunktsarbeit ohne Förderleistung.

Für jedes Produkt existiert ein Bereich der spezifischen Granulierarbeit, innerhalb dessen man optimale Granulateigenschaften erhält. Dieser Bereich ist unterschiedlich in Breite und absoluter Größe aufgrund der unterschiedlichen Kristallstruktur, Kristallhärte, Primärkristallgröße und der synthesebedingten, unvermeidbaren Verunreinigungen im Produkt. Die Einstellung der Gleitfähigkeit des Feuchtpulvers durch beispielsweise Wasser und/oder Gleitmittelzusatz hat den Sinn, den Granulierprozeß innerhalb des optimalen Bereiches der spezifischen Granulierarbeit durchführen zu können.

Steigert man den Maschinendurchsatz stark, so beobachtet man oft einen überproportionalen Anstieg der elektrischen Leistungsaufnahme wegen der mechanischen Auspressung von Wasser, die Granulierbedingungen können dann nicht mehr über einen längeren Zeitraum konstantgehalten werden. Dieser Effekt tritt im allgemeinen im durchschnittlichen Korngrößenbereich oberhalb von ca. 20 μm auf. Bei kleineren Primärkorndurchmessern beobachtet man mitunter den umgekehrten Effekt : das Material wird fließfähiger, es zeigt thixotrope Eigenschaften. Das extrudierte Material ist dann klebrig und im Feuchtzustand nicht rieselfähig. Die Einzelgranulatstränge zerfallen daher nicht aufgrund ihres Eigengewichtes, sie kleben vielmehr aneinander fest und bilden Klumpen. Das Erscheinungsbild ist ähnlich wie bei der Verwendung von zu feuchtem und/oder zu viel Gleitmittel enthaltenden Material bzw. Granulieren mit vorausgehender Knetung oder Plastifizierung das Feuchtgutes. Das Produkt läßt sich jedoch nach wie vor gut in den Granulator eindosieren, was bei zu feuchtem Pulver nur schwer möglich ist.

Die zu granulierenden Kautschukchemikalien gehören verschiedenen chemischen Substanzklassen an. Folgende Produkte lassen sich vorteilhaft in die erfindungsgemäße Granulatform überführen.

2-Mercaptobenzthiazol- und seine Derivate wie Zink-2-mercaptobenzthiazol oder Dibenzthiazolyldisulfid ;

Sulfenamide des 2-Mercaptobenzthiazol wie Benzthiazolyl-N-cyclohexylsulfenamid, Benzthiazolyl-N-dicyclohexylsulfenamid, Benzthiazolyl-N-t-butylsulfenamid ; Benzthiazolyl-N-morpholinylsulfenamid ;

Guanidinderivate wie N,N'-Diphenylguanidin, N,N'-Di-o-tolylguanidin oder o-Tolyldiguanid ;

Thioharnstoffderivate wie 2-Thionoimidazolidin ;

Benzimidazol und seine Derivate wie Methylbenzimidazol, 2-Mercaptobenzimidazl oder 4- bzw. 5-Methyl-2-mercaptobenzimidazol, Zink-mercaptobenzimidazol ;

Zinksalze der Dithiocarbamidsäure wie Zink-N,N-dimethyldithiocarbamat, Zink-N,N-diethyldithiocarbamat, Zink-N,N-dibutyldithiocarbamat, Zink-N-ethylphenyldithiocarbamat, Zink-N-pentamethylendithiocarbamat oder das Doppelsalz aus Zink-N-ethylphenyldithiocarbamat und Cyclohexylethylamin ;

Disulfide wie Tetramethylthiuramdisulfid, N,N'-Dimethyl-N,N'-diphenylthiuramdisulfid, Dibenzothiazolyldisulfid oder S-Benzthiazolyl-S'-morpholinyldisulfid,

Monosulfide wie Tetramethylthiurammonosulfid ;

Aromatische Amine wie N-Isopropyl-N'-phenyl-p-phenylendiamin, Phenyl-β-naphthylamin, N-Hexyl-N'-phenyl-p-phenyldiamin ;

Phenolderivate wie 2,2'-Methylen-bis-(4-methyl-6-tert.-butylphenol) 2,2'-Methylen-bis-(4-methyl-6-cyclohexylphenol), 2-Morpholino-3-spiro-3'-methylcyclohexen (3'-yl)-5-hydroxicumaran, Pentachlorthiophenol-Zinksalz ;

Derivate des Tetrahydrobenzaldehyds wie Pentaerythrit-bis-tetrahydrobenzaldehydacetal ;

Anorganische Füllstoffe wie Zinkoxid, Kieselsäure und Silikate, Ruß ;

Carbonsäuren und deren Derivate wie Benzoesäure, Phthalsäureanhydrid, Zinkstearat, Stearinsäure ;

Stickstoffabspaltende Treibmittel wie Benzosulfohydrazid, Toluolsulfohydrazid, Benzoldisulfohydrazid, Azodicarbonamid, Diphenyläther-4,4'-disulfonsäuredihydrazid, sowie Gemische solcher Substanzen mit Phlegmatisierungsmitteln ;

Schwefel.

Auch Mischungen dieser Chemikalien untereinander sowie mit anderen Substanzen können zu den erfindungsgemäßen Granulaten verarbeitet werden.

Als Maschinen zur Herstellung der erfindungsgemäßen Granulate können sowohl gleichsinnig wie auch gegensinnig drehende Zweiwellenschneckenpressen eingesetzt werden. Die Länge der Schnecken soll bei gegensinnigem Drehsinn ihren zehnfachen Durchmesser nicht überschreiten (L/D-Verhältnis $\leq 10$) bevorzugt wird ein L/D-Verhältnis $\leq 6$.

Die Schneckenwellen sollen eine positive Extrusionscharakteristik aufweisen. Hierunter ist zu verstehen, daß die Schneckenenden, welche das Material zur Extrusion gegen die Düsenplatte fördern, eine mindestens gleich große Förderleistung wie die Schneckensegmente im Einzugsbereich haben sollen. Bei eingängigen Schneckenwellen kann das Extrusionsvermögen durch besondere mehrzackige Abstreifaufsätze auf das Schneckenende noch erhöht und somit die Granulatdurchsatzmenger gesteigert werden. Die Schneckenwellen sollen keine Kompressions- oder Knetzone aufweisen. Um ein möglichst günstiges Einzugsverhalten zu erzielen, sollen die Schneckenstege möglichst schmal im Verhältnis zur Steigung ausgebildet sein.

Der Spalt zwischen Schneckenende und Düsenplatte soll maximal 1,6 mm, vorzugsweise maximal 1,0 mm breit sein. In Beispiel 15 bis 17 ist gezeigt, wie die Breite dieses Spaltes die spezifische Granulierarbeit beeinflußt. Danach ist es bei einer Spaltbreite größer als 1,6 mm nur noch mit extrem gleitfähig eingestelltem Feuchtpulver möglich, spezifische Granulierarbeiten von unter 30 Wh/kg zu erzielen. Solche Pulvereinstellungen führen dann jedoch zur Extrusion von spaghettiförmigen Strängen, die leicht miteinander verkleben. Generell ist eine möglichst geringe Spaltbreite optimal, da man dann im Bereich der größten Betriebssicherheit arbeitet, siehe Diagramm 9. Aus diesem Grund sollen die Schneckenenden auch flach und planparallel zur Düsenplatte und nicht spitz bzw. kegelförmig auslaufend gestaltet sein.

Die Düsenbohrungen werden vorteilhaft in Form konzentrischer Kreise in dem Bereich angeordnet, der von den Schneckengängen überstrichen wird. Je nach Drehsinn, Fördercharakteristik und Gangzahl der Schneckenwellen kann der Abstand der Einzelbohrungen zueinander auf der Plattenfläche unterschiedlich groß sein. Das Verhältnis aus der Summe der Düsenbohrungsflächen zum freien Schneckenquerschnitt wird als Kompressionsverhältnis definiert. Es ist ein wichtiger Parameter zur Einstellung der gewünschten spezifischen Granulierarbeit.

Die Düsenbohrungen sind vorzugsweise zylindrisch gestaltet. Werden die Bohrungen schneckenseitig kegelförmig angesenkt, so resultiert eine starke Erhöhung der spezifischen Granulierarbeit. Eine außenseitig angebrachte kegelförmige Ansenkung bleibt dagegen ohne Einfluß, sie verursacht jedoch mitunter Oberflächenaufrauhungen an den extrudierten Strängen.

Folgende Maschinen wurden für Versuche verwendet :

Maschine 1

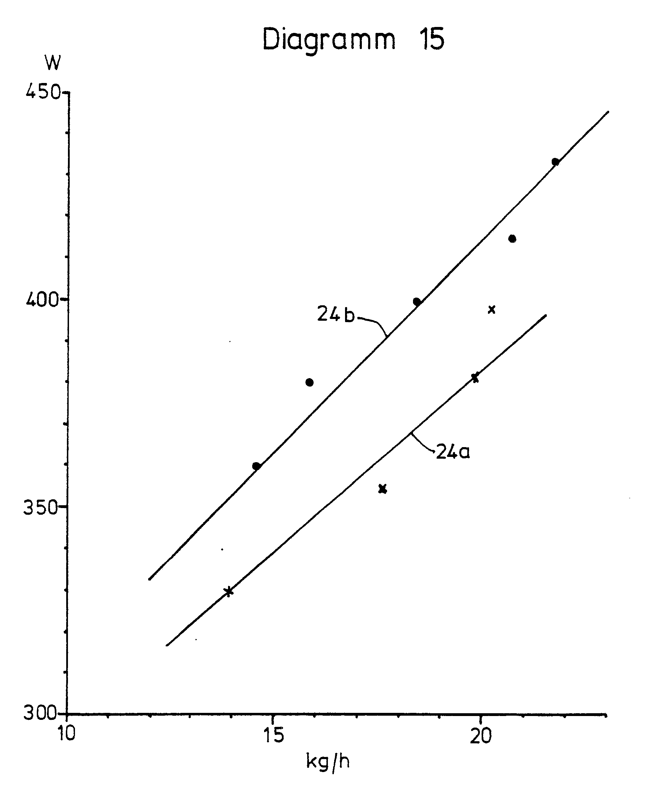

Die Abbildung 1 im Anhang zeigt die Schemazeichnung einer Granulierschneckenpresse mit gleichsinnig drehenden Wellen (Durchmesser 35 mm) mit kämmend angeordnetem Schneckenprofil. Es handelt sich um ein zweigängig geschnittenes Schneckenpaar, die beiden Wellen können vertikal oder horizontal zueinander angeordnet sein. Im Schaubild ist eine Schnecke mit nebeneinanderleigenden Wellen gezeichnet worden, bei den im folgenden beschriebenen Versuchen wurde jedoch eine Maschine mit übereinander liegenden Wellen benutzt. Das L/D-Verhältnis beträgt 5,5, der Abstand der Schneckenstege von Zylinder beträgt ca. 1 mm und die Spaltbreite zwischen glatt abgeschnittenen Schneckenenden und Düse beträgt 0,2 mm, sofern nicht anders angegeben. Im Einzugstrichter befindet sich ein Wühlrad, welches für eine gute Füllung der Schneckengänge mit dem Feuchtpulver verantwortlich ist. Der Antrieb der Maschine erfolgt über einen Elektromotor und ein mechanisches Stellgetriebe über eine Rutschkupplung ; die elektrische Leistungsaufnahme des Motors kann mittels einen Schreiber registriert werden. Die Düsenplatte ist auswechselbar und mit einer Überwurfmutter am Zylinder gehaltert, die Schneckenenden sind nicht gelagert.

Die in Abbildung 1 angegebenen Bezugszeichen stellen folgendes dar :

1 = Zylinder
2 = Düsenplatte
3 = Düsenkopfplatte
4 = Spalt Schneckenkopf/Düsenplatte
5 = Einfülltrichter
6 = Wühlrad
7, 8 = Schneckenwellen, zweigängig kämmend
9 = Düsenkanalbohrung.

Folgende Düsenplatten wurden benutzt :

Tabelle I

| Düsen-Nr. | Bohrungs-durchmesser (mm) | Platten-dicke (mm) | Anzahl Bohrungen je Platte | $K_D$ | Bohrung angesenkt |
|---|---|---|---|---|---|
| 1,1 | 2,0 | 4,0 | 74 | 1:4,1 | nein |
| 1,2 | 2,0 | 4,0 | 106 | 1:2,9 | nein |
| 1,3 | 2,0 | 7,0 | 106 | 1:2,9 | 3 mm, 60° |
| 1,4 | 2,5 | 7,0 | 74 | 1:3,3 | 3 mm, 60° |
| 1,5 | 2,5 | 7,0 | 106 | 1:2,2 | 3 mm, 60° |

Maschine 2

Diese Maschine entspricht im Aufbau und der Gestaltung der Maschine 1, sie hat jedoch einen Schneckendurchmesser von 70 mm, L/D-Verhältnis = 9,5.

Folgende Düsenplatten wurden verwendet :

Tabelle II

| Düsen-Nr. | Bohrungs-durchmesser (mm) | Platten-dicke (mm) | Anzahl Bohrungen je Platte | $K_D$ | Bohrung angesenkt |
|---|---|---|---|---|---|
| 2,1 | 2,0 | 6 | 491 | 3,36 | nein |

Maschine 3

Maschine 3 entspricht im Aufbau der Maschine 1 mit folgenden Parametern :

| | |
|---|---|
| Drehsinn : | gegensinnig |
| Zahl der Schneckengänge : | einer je Welle |
| Schneckendurchmesser : | 140 mm |
| Schneckenlänge : | 280 mm |
| L/D-Verhältnis : | 2 : 1 |
| Anordnung der Wellen : | horizontal |
| Abstand Steg-Zylinder : | 2 mm |
| Abstand Schneckenende-Düsenplatte : | 0,5 mm |

Füllung der Granuliermaschine über eine Dosierschnecke mit regelbarem Antrieb.

Auf den Schneckenenden waren je ein dreiflügeliges Abstreifelement versenkt montiert. Jeder Abstreiferflügel drückt das Feuchtpulver in die Düsenbohrungen hinein, so daß eine große Extrusionsleistung resultiert.

Verwendete Düsenplatte 3.1 :

| | |
|---|---|
| Anzahl der Bohrungen : | 1 839 |
| Durchmesser der Bohrungen : | 2 mm |
| Dicke der Platte : | 10 mm |
| Kompressionsverhältnis $K_D$ : | 3,2 |
| Art der Bohrungen : | zylindrisch |

Eingesetzte Substrate sowie Einstellung der Gleitfähigkeit.

Alle bei nachstehenden Granulierbeispielen eingesetzten Kautschukchemikalien wurden frei von Zusätzen als Feuchtgut aus der Großproduktion vor dem Trockenprozeß entnommen. Die auf den technischen Filtergeräten (z. B. Nutschen, Filterpressen, Bandfilter, Drehfilter) oder Zentrifugen isolierten Feuchtgüter wiesen Restwassergehalte auf, die etwas niedriger waren, als sie später für den Granulierprozeß für optimal befunden wurden.

Um die erforderlichen Mengen an Gleitmittel und gegebenenfalls an zusätzlichem Wasser einzumischen, wurden zwei Wege beschritten :

Im Anmaischprozeß wird das der Produktion entnommene Filterfeuchtgut zu ca. 30 % in Wasser angemaischt, das Gleitmittel in der gewünschten Menge (auf Feststoff bezogen) hinzugesetzt und durch Rühren homogen verteilt. In einem zweiten Filtrations- oder Zentrifugierschritt wird das Produkt auf die gewünschte Restfeuchte eingestellt. Die im Feuchtpulver verbleibende Gleitmittelmenge ist nur schwer und ungenau zu analysieren, sie dürfte zwischen 50 und 95 % der Einsatzmenge liegen.

Im Mischprozeß wird das der Produktion entnommene Filterfeuchtgut mit der zusätzlich benötigten Menge Wasser und der gewünschten Menge des jeweiligen Gleitmittels versetzt und in handelsüblichen Mischern wie beispielsweise Taumelmischer, Pflugscharmischer, Schaufelmischer, Schneckenmischer oder Nauta-Mischer homogenisiert.

Die auf diese Weise hergestellten Feuchtpulver sind ohne zusätzliche Bearbeitungsvorgänge wie beispielsweise Walken oder Kneten für die Granulierung einsetzbar. Ein solcher zusätzlicher Knetvorgang ist, wie bereits oben ausgeführt, für feinkörnige Kautschukchemikalien unter Umständen nachteilig, da es zu Entwässerungs- oder Thixotropieerscheinungen kommen kann. In solchen Fällen kann eine dem erfindungsgemäßen Prozeß entsprechende spezifische Granulierarbeit nicht eingestellt werden, die optimalen Granulateigenschaften sind dann nicht zu erzielen.

Für die Granulierversuche wurden beispielhaft nachfolgend in Tabelle III aufgeführte Kautschukchemikalien eingesetzt.

(Siehe Tabelle III Seite 9 f.)

Tabelle III

| Kautschukchemikalien | Kurzbezeichnung | mittlere Primärkorngröße (µm) | Einmischtest des Pulvers (EMT) | Fp (°C) | Gehalt (%) |
|---|---|---|---|---|---|
| Dibenzothiazolyldisulfid | MBTS | 20 neigt zur Agglomeratbildung | 1 | 167-72 | 94,6 |
| S-Benzthiazolyl-S'-morpholinyldisulfid | Vulkuren-2 | 18 | 0,5 | 130 | 96,5 |
| 2-Mercaptobenzthiazol | MBT | 7 | 0 - 0,5 | 176-182 | 98,4 |
| Benzthiazolyl-N-cyclohexylsulfenamid | CZ | 4o | 1 | 103 | 95,9 |
| Benzthiazolyl-N-t-butylsulfenamid | NZ | 190 | 1 | 107-110 | 90,6-92,6 |
| N,N'-Diphenylguanidin | D | 20 neigt zur Agglomeratbildung | 0 | 148 | 99,3 |
| Benzthiazolyl-N,N-dicyclohexalsulfenamid | DZ | 60 | 1 | 102 | 97,2 |
| Tetramethylthiuramdisulfid | TMS | 40 | 0 | 108-110 | - |

Folgende Gleitmittel wurden bei den Versuchen verwendet :

Tabelle IV

| Kurzbezeichnung | Struktur |
|---|---|
| L-3 | $H_{2n+1}C_n-(OCH_2-CH)_3OH$<br>n: im Mittel 12 |
| L-5 | $H_{2n+1}C_n-(OCH_2-CH_2)_5-OH$<br>n: im Mittel 12 |
| L-7 | $H_{2n+1}C_n-(OCH_2-CH_2)_7-OH$<br>n: im Mittel 12 |
| NP-4 | $H_{12}C_9$- 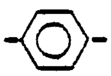 -$(OCH_2-CH)_4-OH$ |

Für jedes der nachstehenen Beispiele wurde das der Produktion entnommene filterfeuchte Material, wie beschrieben, nach dem Anmisch- oder dem Anmaischverfahren durch Zusatz von Gleitmittel granulierfähig eingestellt. Dies Feuchtpulver wurde auf der betreffenden Granulierschneckenpresse bei verschiedenen Durchsätzen granuliert. Die Leistungsaufnahme des Antriebsmotors wurde gemessen und gegen den jeweiligen Durchsatz aufgetragen, die entsprechenden Diagramme finden sich zu jedem Beispiel im Anhang. Bei einer mittleren Durchsatzmenge wurden Granulatproben entnommen, im Vakuum bei 50 bis 60 °C auf einem Blech getrocknet und dann auf ihre Eigenschaften hin untersucht. Die wichtigsten Versuchsdaten finden sich in den nachstehenden Tabellen.

Beispiel 1-3

Granulierung von MBTS

Tabelle V, a Granulierung von MBTS

| Beispiel Nr. | Verfahren der Probenvorbehandlung | Gleitmittel (%) | Pulverfeuchte (%) | Granuliermaschine Nr. | Düsenplatte Nr. | Spezif. Granulierarbeit (Wh/kg) | Maxim. Durchs. (kg/h) | Diagramm-Nr. |
|---|---|---|---|---|---|---|---|---|
| 1 | Maischen | 1,5 L-3 | 30,4 | 1 | 1,1 | 8,8 | 66 | 1 |
| 2 | " | 2,5 L-3 | 28,2 | 1 | 1,4 | 11,8 | 66 | 1 |
| 3 | Mischen, Lödige-Mischer | 0,75 L-3 | 30,4 | 3 | 3,1 | 11,8 | 300 | 3 |

Tabelle V, b

| Beispiel Nr. | EMT | Feingutanteil (%) | Granulatstabilität | Staubwert | Fp. (°C) | Optische Beurteilung |
|---|---|---|---|---|---|---|
| 1 | 1 | $\leq 3$ | 65 | 2 | 168-72 | einheitlich |
| 2 | 1 | $<3$ | 66 | 2 | 168-72 | einheitlich |
| 3 | 0,5 | 2,2 | 58 | 2 | 167-72 | einheitlich |

Beispiel 4 bis 6

Granulierung von MBT

Tabelle VI, a Granulierung von MBT

| Beispiel Nr. | Art der Probenvorbehandlung | Gleitmittel (%) | Pulverfeuchte | Düse Nr. | Maschine Nr. | Spez. Granulierarbeit (Wh/kg) | Max. Durchsatz (kg/h) | Diagramm Nr. |
|---|---|---|---|---|---|---|---|---|
| 4 | Maischen | 2,5 L-3 | 26,4 | 1,5 | 1 | 27,5 | 60 | 2 |
| 5 | Mischen | ohne | 30,7 | 3,1 | 3 | 24,3 | 200 | 4 |
| 6 | Mischen | 0,5 L-5 | 30,4 | 3,1 | 3 | 10,5 | 100 | 3 |

Tabelle VI, b Granuliereigenschaften von MBT

| Beispiel Nr. | EMT | Feingutanteil (%) | Granulatstabilität | Staubwert | Fp. (°C) | Gehalt (%) | optische Beurteilung |
|---|---|---|---|---|---|---|---|
| 4 | 0,5 | 3,0 | 69 | 2 | 170-77 | 96,6 | einheitlich |
| 5 | 1 | 1,0 | 41 | 2 | 171-78 | 97,5 | einheitlich |
| 6 | 0 | 1,2 | 47 | 2 | 171-78 | 96,6 | einheitlich |

Ein Vergleich von Beispiel 4 mit Beispiel 5 zeigt den Einfluß des Kompressionsverhältnisses auf die Granulateigenschaft. Die Düsenplatte 1,5 in Beispiel 4 entspricht einem Kompressionsverhältnis von $K_D$ = 2,2. Hier ist trotz hoher spezifischer Granulierarbeit von 27,5 Wh/kg eine Einmischbewertung von 0,5 erzielt worden. Die Düsenplatte 3,1 entspricht einem Kompressionsverhältnis von 3,2, hier wurde trotz der niedrigen spezifischen Granulierarbeit von 24,3 Wh/kg eine Einmischbarkeit von 1,0 erzielt, die Granulatstabilität ist besser geworden. Senkt man unter gleichbleibendem $K_D$ die spezifische Granulierarbeit weiter ab, so erhält man hervorragend einmischbare Granulate, so in Beispiel 6. Dieser Vergleich zeigt anschaulich, daß man die Einstellung der Pulvergleitfähigkeit nicht losgelöst von den Maschinenparametern sehen kann. Man kann vielmehr für beide Bereiche nur Intervalle angeben, innerhalb derer eine Granulierung möglich ist. Für jedes Produkt sowie für jede Maschine ist dann eine eigen Optimierung innerhalb dieser Intervalle erforderlich.

Beispiele 7 bis 10

Granulierung von CZ

Tabelle VII, a Granulierung von CZ

| Beispiel Nr. | Art der Probenvorbehandlung | Gleitmittel (%) | Pulverfeuchte (%) | Maschine Nr. | Düse Nr. | Spez. Granulierarbeit (Wh/kg) | Maxim. Durchsatz (kg/h) | Diagramm Nr. |
|---|---|---|---|---|---|---|---|---|
| 7 | Mischen | 1,0 L-3 | 17,0 | 3 | 3,1 | 27,5 | 370 | 4 |
| 8 | Mischen | 1,0 L-3 | 20,3 | 3 | 3,1 | 8,3 | 270 | 4 |
| 9 | Mischen | 0,15 L-3 | 25 | 3 | 3,1 | 4,8 | 200 | 3 |
| 10 (nicht erfindungsgemäß) | Mischen | 0,3 L-3 | 25 | 3 | 3,1 | 0,9 | 150 | 3 |

Tabelle VII, b Granulateigenschaften CZ

| Beispiel Nr. | EMT | Feingutanteil (%) | Granulatstabilität | Staubwert | Fp. (°C) | Gehalt (%) | Restamingehalt (%) | optische Beurteilung |
|---|---|---|---|---|---|---|---|---|
| 7 | 0,5 | 0,4 | 41,7 | 0 | 104 | 95 | 0,4 | einheitlich |
| 8 | 1 | 0,9 | 32,8 | 0 | 104 | 96,1 | 0,5 | einheitlich |
| 9 | 1 | 0,5 | 55 | 2 | 104 | 96,7 | 0,5 | einheitlich |
| 10 (nicht erfindungsgemäß) | 0,5 | 70,3 | 75 | - | 104 | 96,5 | 0,5 | einheitlich |

Beispiel 10 ist nicht erfindungsgemäß. Die zur Granulierung aufgewendete spezifische Granulierarbeit ist mit 0,9 Wh/kg zu niedrig, so daß ein uneinheitliches Granulat mit extrem hohem Feingutanteil von 70,3 % resultiert. Daneben finden sich einige Klumpen aus miteinander verklebten Granulaten.

Beispiel 9 beschreibt die Granulierung des gleichen Feuchtpulvers, jedoch mit geringerer Gleitmittelmenge. Die resultierende spezifische Granulierarbeit von 4,8 Wh/kg fällt in den erfindungsgemäßen Bereich, die resultierenden Granulateigenschaften sind gut.

Beispiele 11 bis 15

Granulierung von NZ

Tabelle VIII, a Granulierung von NZ

| Beispiel Nr. | Art der Probenvorbereigung | Gleitmittel (%) | Pulverfeuchte (%) | Maschine Nr. | Düse Nr. | Spez. Granulierarbeit (Wh/kg) | Diagramm Nr. |
|---|---|---|---|---|---|---|---|
| 11 | Maischen | 1,5 L-3 | 16,2 | 1 | 1,1 | 21,8 | 5 |
| 12 | Maischen | 2,5 L-3 | 15,3 | 1 | 1,3 | 22,2 | 5 |
| 13 | Maischen | 1,5 L-3 | 21,0 | 1 | 1,1 | 10,0 | 5 |
| 14 | Maischen | 1,5 L-3 | 21,0 | 1 | 1,3 | 10,3 | 5 |

Tabelle VIII, b Granuliereigenschaften von NZ

| Beispiel Nr. | EMT | Granulatstabilität | Staubwert | Optische Beurteilung |
|---|---|---|---|---|
| 11 | 0,5 | 28 | 2 | einheitlich |
| 12 | 1 | 28 | 2 | einheitlich |
| 13 | 0,5 | 61 | 2 | einheitlich |
| 14 | 1 | 53 | 2 | einheitlich |

Ein Vergleich von Beispiel 11 mit Beispiel 13 zeigt, wie unter sonst gleichen Bedingungen durch Erhöhung der Pulverfeuchte von 16,2 auf 21 % die spezifische Granulierarbeit von 21,8 auf 10,0 Wh/kg abnimmt, die Granulatstabilität verschlechtert sich parallel dazu von 28 auf 61. Analoges Verhalten wird deutlich beim Vergleich der Beispiele 12 und 14. Ein Vergleich der Beispiele 11 mit 12 bzw. 13 mit 14 ist nicht möglich, da mehrere Parameter wie Gleitmittelmenge, Pulverfeuchte, Düsenform und Kompressionsverhältnis gleichzeitig verändert wurden.

Beispiele 15 bis 17

Einfluß des Spaltabstandes zwischen Düsenplatte und Schneckenende auf die spezifische Granulierarbeit, dargestellt mit NZ.

Diagramme 6 bis 8.

Maschinelle Anordnung

Zwischen das Ende des Schneckenzylinders und der Düsenplatte wurden Distanzringe unterschiedlicher Stärke gelegt. Da die Schneckenenden in einer Ebene mit dem Zylinderende liegen, ist die Stärke des Distanzringes praktisch identisch mit dem Abstand zwischen Düsenplatte und den Schneckenenden.

Die Ergebnisse sind in Tabelle IX bzw. den Diagrammen 6 bis 9 zusammengestellt.

Man erkennt, wie die spezifischen Granulierarbeiten mit zunehmendem Spaltabstand rasch ansteigen. In Diagramm 9 wird dieser Zusammenhang besonders anschaulich dargestellt : die spezifische Granulierarbeit steigt bis zu einer Spaltbreite von 0,7 mm nur geringfügig an, um dann überproportional anzuwachsen. Dieser Anstieg ist bei der weniger gleitfähigen Mischung von Beispiel 15 stärker als bei den Mischungen der Beispiele 16 und 17. Ein Vergleich dieser beiden Versuche zeigt den Einfluß des Kompressionsverhältnisses auf die spezifische Granulierarbeit unter sonst identischen Versuchsbedingungen : die spezifischen Granulierarbeiten bei Beispiel 16 mit $K_D = 1 : 4,1$ liegen höher als bei Beispiel 17 mit $K_D = 1 : 2,9$ unter sonst gleichen Bedingungen.

Die Beispiele 15 bis 17 zeigen, wie man über maschinentechnische Parameter das Granulierverhalten beeinflussen kann.

(Siehe Tabelle IX Seite 14 f.)

Tabelle IX Einfluß des Spaltabstandes zur Düse bei NZ

| Beispiel | Art der Probenvorbereitung | Gleitmittel (%) | Pulverfeuchte (%) | Maschine Nr. | Düse Nr. | Diagramm Nr. | Spaltabstand (mm) | Spez. Granulierarbeit (Wh/kg) | Bemerkungen |
|---|---|---|---|---|---|---|---|---|---|
| 15 a | Mischen | 1 L-5 | 16,5 | 1 | 1,2 | 6 | 0 | 24,3 | |
| 15 b | Mischen | 1 L-5 | 16,5 | 1 | 1,2 | 6 | 0,7 | 27,0 | Erwärmung des Granulates |
| 15 c | Mischen | 1 L-5 | 16,5 | 1 | 1,2 | 6 | 1,1 | 45 | Entwässerung des Feuchtpulvers |
| 15 d | Mischen | 1 L-5 | 16,5 | 1 | 1,2 | 6 | 1,6 | 70 | Maschine bleibt stehen |
| 16 a | Mischen | 0,5 L-3 | 21,2 | 1 | 1,3 | 7 | 0 | 13,0 | |
| 16 b | Mischen | 0,5 L-3 | 21,2 | 1 | 1,3 | 7 | 0,7 | 16,3 | |
| 16 c | Mischen | 0,5 L-3 | 21,2 | 1 | 1,3 | 7 | 1,1 | 20,3 | |
| 16 d | Mischen | 0,5 L-3 | 21,2 | 1 | 1,3 | 7 | 1,6 | 40 | Starke Erwärmung des Granulats |
| 17 a | Mischen | 0,5 L-3 | 21,2 | 1 | 1,2 | 8 | 0 | 9,3 | |
| 17 b | Mischen | 0,5 L-3 | 21,2 | 1 | 1,2 | 8 | 0,7 | 10,3 | |
| 17 c | Mischen | 0,5 L-3 | 21,2 | 1 | 1,2 | 8 | 1,1 | 20,5 | |
| 17 d | Mischen | 0,5 L-3 | 21,2 | 1 | 1,2 | 8 | 1,6 | 28,5 | Starke Erwärmung des Granulates |

Beispiele 18 und 19

Granulierung von D

Tabelle X a Granulieren von D

| Beispiel Nr. | Verfahren der Probenvorbehandlung | Gleitmittel (%) | Pulverfeuchte (%) | Granuliermaschine Nr. | Düse Nr. | Spez.Granulierarbeit (Wh/kg) | Maximaldurchs. (kg/h) | Diagramm Nr. |
|---|---|---|---|---|---|---|---|---|
| 18 a | Mischen | 0 | 30 | 1 | 1,2 | 18,0 | 14 | 10 |
| 18 b | Mischen | 0,5 L-3 | 30 | 1 | 1,2 | 13,4 | 20 | 10 |
| 18 c | Mischen | 1 L-3 | 30 | 1 | 1,2 | 6,0 | 23 | 10 |
| 19 a | Mischen | 0 L-3 | 26 | 1 | 1,2 | 36,0 | 23 | 11 |
| 19 b | Mischen | 0,5 L-3 | 25 | 1 | 1,2 | 26,1 | 20 | 11 |
| 19 c | Mischen | 1,0 L-3 | 25 | 1 | 1,2 | 19,5 | 21 | 11 |

Tabelle X b Granulateigenschaften von D

| Beispiel Nr. | EMT | Feingutanteil (%) | Granulatstabilität (%) | Staubwert | Fp. (°C) | Gehalt (%) | Optische Beurteilung |
|---|---|---|---|---|---|---|---|
| 18 a | 1-1,5 | 1,67 | 23,1 | 1 | 145-48 | 99,3 | einheitlich |
| 18 b | 0,5 | 0,2 | 7,5 | 2 | 145-48 | 99,0 | einheitlich |
| 18 c | 0,5 | 0 | 5,8 | 1 | 144-47 | 98,5 | einheitlich |
| 19 a | 3 | 1,3 | 24,6 | 2 | 145-48 | 99,2 | nicht erfindungsgemäß |
| 19 b | 1 | 0,5 | 21,6 | 2 | 144-47 | 99,1 | einheitlich |
| 19 c | 1 | 0,1 | 10,8 | 2 | 144-47 | 98,7 | einheitlich |

Spaltabstand Düsenplatte/Schneckenende : 0,2 mm.

Die Beispiele 18 und 19 zeigen in drei Feuchtguteinstellungen den Einfluß des Gleitmittelanteils (hier verwendet : Emulgator L-3) auf die spezifische Granulierarbeit. Die steigende Gleitmittelmenge bewirkt eine sinkende spezifische Granulierarbeit.

Diagramm 12 zeigt diesen Zusammenhang unmittelbar. Die spezifische Granulierarbeit steht in nahezu linearer Abhängigkeit von der Gleitmittelkonzentration, wenn alle anderen Parameter konstantgehalten werden.

Wertet man die Versuchspunkte der Beispiele 18 und 19 nicht nur graphisch, sondern rechnerisch nach der Methode der kleinsten Fehlerquadrate aus, so erhält man folgende Beziehungen :

$$N_{el} = A_{spez.} \times D + N_o$$

| Beispiel-Nr. | $N_{el}$ (W) |
|---|---|
| 18 a | 18,04 D + 354,7 |
| 18 b | 13,39 D + 231,4 |
| 18 c | 6,25 D + 205,0 |
| 19 a | 36,02 D + 291,8 |
| 19 b | 26,09 D + 281,2 |
| 19 c | 19,62 D + 231,7 |

$N_{el}$ : elektrische Leistungsaufnahme (W)
$N_0$ : Ordinatenabschnitt der elektrischen Leistungsaufnahme bei Nullförderung, « Nulleistung » (W)
$A_{spez.}$ : Spezifische Granulierarbeit (Wh/kg)
D : Durchsatz (kg/h)

Man erkennt, daß die « Nulleistung » $N_0$ abhängig von der verwendeten Gleitmittelmenge ist. Ein höherer Gleitmittelgehalt setzt neben der spezifischen Granulierarbeit auch die « Nulleistung » herab.

Dieser Zusammenhang ist in Diagramm 13 aufgetragen. Zusätzlich wurde ein Reproduktionsversuch von Beispiel 18 mit D etwas geringerer mittlerer Korngröße (20 µm) und zugunsten des Feinanteils veränderter Korngrößenverteilung aufgenommen. Die horizontale Gerade bei 225 W entspricht der « Nulleistung » des ungefüllten Granulierextruders, extrapoliert auf die Drehzahl Null. Man erkennt deutlich die Schmierwirkung der gleitmittelhaltigen Feuchtpulver beim Vergleich der Versuchskurven mit der Nulleistung der Maschine.

Beispiel 20

Granulierung von D mit Maschine 2

An Maschine 2 bestand aus technischen Gründen keine Möglichkeit, die Leistungsaufnahme in Abhängigkeit vom Durchsatz und somit die spezifische Granulierarbeit zu bestimmen. Die Versuche dienten in erster Linie der Bestimmung des Maximaldurchsatzes sowie der Granulateigenschaften :

| Versuchsdaten | Beispiel 20 a | Beispiel 20 b |
|---|---|---|
| Feuchte des Pulvers | 32 % | 34 % |
| Gleitmittel | 0,5 % L-3 | 0,5 % L-3 |
| Stromaufnahme | 2-3 kW | 2,2 - 2,8 kW |
| Granulierdauer | 138 min | 70 min |
| Feuchtgutdurchsatzmenge | 302 kg/h | 291 kg/h |

| Granulateigenschaften | | |
|---|---|---|
| EMT | 0 | 0 |
| Granulatstabilität | 28 | 38 |
| Staubwert | 0 | - |
| Fp. | 145-148 °C | 144-147 °C |
| Verdampfungsverlust | 0,15 % | 0,25 % |
| Ascheanteil | 0,06 | 0,1 |
| Wirkstoffgehalt | 98,4 % | 97,9 % |

Beispiel 21

Einfluß des Verhältnisses von Düsenkanallänge zur -durchmesser (l/d-Verhältnis) auf die spezifische Granulierarbeit.

Substrat : D aus Beispiel 18 b
Maschine 1
Spaltabstand Düse/Schneckenende : 0,7 mm

Jede Bohrung einer Düsenplatte (106 Loch, 2 mm Bohrungsdurchmesser, 9,5 mm Plattenstärke ≙ l/d = 4,75) wurde von der Außenseite her stufenweise auf 3 mm aufgebohrt, so daß die wirksame Düsenkanallänge 9,5 ; 8 ; 6 und 4 mm betrug ; die entsprechenden l/d-Verhältnisse sind 4,75 ; 4 ; 3 und 2.

| l/d-Verhältnis | $A_{spez.}$ (Wh/kg) |
|---|---|
| 4,75 | nicht meßbar, Granulator wird blockiert |
| 4,0 | 31 |
| 3,0 | 21 |
| 2,0 | 24 |

Man erkennt als optimalen Bereich das l/d-Verhältnis von 2,0 bis 3,0. Bei größeren Werten steigt die spezifische Granulierarbeit steil an. Das Ergebnis ist maschinentypisch, bei Maschine 3 (Düse 3,1) kann mit l/d = 5 hervorragend granuliert werden, siehe Beispiele 5 bis 9.

Beispiel 22

Granulierung von Vulkuren-2

| | |
|---|---|
| Maschine : | 1 |
| Düsenplatte : | 1,5 |
| Probenvorbehandlung : | Anmischen |
| Gleitmittel : | 2,5 % L-3 |
| Pulverfeuchte : | 18,6 % |
| Spez. Granulierarbeit : | 13,4 Wh/kg |
| Diagramm-Nr : | 14 |

Granulateigenschaften von Vulkuren-2

| | |
|---|---|
| Einmischtest : | 0,5 |
| Staubwert : | 2 |
| Feingutanteil : | 3 |
| Granulatstabilität : | 69,9 |
| Fp. : | 128-30 °C |
| Optische Beurteilung : | einheitlich |

Beispiel 22

Granulierung von DZ

| | |
|---|---|
| Maschine : | 1 |
| Düsenplatte : | 1,3 |
| Probenvorbehandlung : | Anmischen |
| Gleitmittel : | 2,5 % L-3 |
| Spez. Granulierarbeit : | 11 Wh/kg |
| Diagramm-Nr. : | 14 |
| Pulverfeuchte : | 17,1 % |

Granulateigenschaften DZ

| | |
|---|---|
| Einmischtest : | 1 |
| Staubwert : | 0 |
| Feingutanteil : | < 1 |
| Granulatstabilität : | 45 |
| Optische Beurteilung : | einheitlich |

(Siehe Tabelle Seite 18 f.)

Beispiel 24

Granulierung von TMS

| Parameter | Beispiel 24 a | Beispiel 24 b |
|---|---|---|
| Maschine | 1 | 1 |
| Düsenplatte | 1,3 | 1,3 |
| Probenbereitung | Anmischen | Anmischen |
| Gleitmittel | 0,5 % L-5 | 0,5 % L-7 |
| Pulverfeuchte | 14,9 % | 14,9 % |
| Spez. Granulierarbeit | 8,7 Wh/kg | 10,3 Wh/kg |
| Diagramm-Nr. | 15 | 15 |

Granulateigenschaften von TMS

| | | |
|---|---|---|
| Einmischtest | 0,5 | 0,5 |
| Staubwert | 0 | 0 |
| Feingutanteil | <0,1 | 0,1 |
| Granulatstabilität | 14,3 | 20,6 |
| Optische Beurteilung | einheitlich | einheitlich |
| Fp. | 108°C | 108°C |

**Patentansprüche**

1. Granulatförmige Agglomerate von pulverförmigen Kautschukchemikalien einer Primärkorngröße von maximal 500 µm, einem Wirkstoffgehalt von mindestens 90 Gew.-% und einer Bewertung a) im Einmischtest von höchstens 1,5, b) im Staubanteil von höchstens 10, c) im Feingutanteil von höchstens 5 und d) im Falltest von höchstens 70.

2. Granulatförmige Agglomerate gemäß Anspruch 1 mit einer Primärkorngröße von maximal 300 µm.

3. Granulatförmige Agglomerate gemäß Anspruch 1 und 2 mit einem Wirkstoffgehalt von mindestens 95 Gew.-%.

4. Granulatförmige Agglomerate gemäß Ansprüchen 1 bis 3 mit einer Bewertung a) im Einmischtest von höchstens 0-1, b) im Staubanteil von höchstens 5, c) im Feingutanteil von höchstens 3 und d) im Falltest von höchstens 50.

5. Granulatförmige Agglomerate gemäß Ansprüchen 1 bis 6 mit einem Durchmesser von 1 bis 6 mm.

6. Verfahren zur Herstellung der granulatförmigen Agglomerate gemäß Ansprüchen 1 bis 5, dadurch gekennzeichnet, daß man die pulverförmigen Kautschukchemikalien einer Primärkorngröße von maximal 500 µm mit einem Anfeuchtemittel und/oder Gleitmittel versetzt und einem Zweiwellenschneckengranulator mit Zwangsförderung zuführt, bei dem der Abstand zwischen Düsenplatte und senkrecht geschnittenem Schneckenende zwischen 0 und 1,6 mm beträgt, wobei das Kompressionsverhältnis $K_D$ zwischen 1 : 6 und 1 : 1,5 und das Verhältnis von Düsenkanallänge zum -durchmesser zwischen 1 und 6 liegt und wobei die spezifische Granulierarbeit von 2 bis 40 Wk/kg beträgt, die Kautschukchemikalien axial durch eine Düsenlochplatte presst, die austretenden Stränge abschneidet oder abbrechen läßt und anschließend trocknet.

7. Verfahren gemäß Anspruch 6, dadurch gekennzeichnet, daß bei dem Schneckengranulator der Abstand zwischen Düsenplatte und senkrecht geschnittenem Schneckenende zwischen 0,1 und 1,0 mm beträgt, wobei das Kompressionsverhältnis $K_D$ zwischen 1 : 4,5 und 1 : 2,5 und das Verhältnis Düsenkanallänge zu Durchmesser zwischen 2 und 5 liegt.

8. Verfahren gemäß Ansprüchen 6 und 7, dadurch gekennzeichnet, daß die spezifische Granulierarbeit 5 bis 30 Wh/kg beträgt.

9. Verfahren gemäß Ansprüchen 6 bis 8, dadurch gekennzeichnet, daß man die pulverförmigen Kautschukchemikalien mit 5 bis 50 Gew.-% Anfeuchtemittel und/oder 0 bis 5 Gew.-% Gleitmittel, bezogen auf Feststoffanteil, versetzt.

10. Verfahren gemäß Ansprüchen 6 bis 8, dadurch gekennzeichnet, daß man die pulverförmige Kautschukchemikalie mit 10 bis 40 Gew.-% Anfeuchtemittel und 0 bis 2 Gew.-% Gleitmittel, bezogen auf Feststoffanteil, versetzt.

**Claims**

1. Granulate-form agglomerates of pulverulent rubber chemicals having a maximum primary grain size of 500 μm, an active substance content of at least 90 % by weight and an assessment a) in the intermixing test of at the most 1.5, b) in the dust proportion test of at the most 10, c) in the fine material proportion test of at the most 5 and d) in the falling test of at the most 70.

2. Granulate-form agglomerates according to claim 1, with a maximum primary grain size of 300 μm.

3. Granulate-form agglomerates according to claim 1 and 2 with an active substance content of at least 95 % by weight.

4. Granulate-form agglomerates according to claims 1 to 3 with an assessment a) in the intermixing test of at the most 0-1, b) in the dust proportion test of at the most 5, c) in the fine material proportion test of at the most 3, and d) in the falling test of at the most 50.

5. Granulate-form agglomerates according to claims 1 to 6 with a diameter of from 1 to 6 mm.

6. A process for the production of the granulate-form agglomerates according to claims 1 to 5, characterised in that the pulverulent rubber chemicals of a maximum primary grain size of 500 μm are mixed with a moistening agent and/or a lubricant and are supplied to a double shaft screw granulator with forced conveyance, in which the spacing between the nozzle plate and the vertically cut screw end is between 0 and 1.6 mm, wherein the compression ratio $K_D$ is between 1 : 6 and 1 : 1.5 and the ratio of nozzle channel length to nozzle channel diameter is between 1 and 6, and wherein the specific granulation work is from 2 to 40 Wk/kg, the rubber chemicals are forced axially through a nozzle perforated plate, the issuing strands are severed or are allowed to break off and are then dried.

7. A process according to claim 6, characterised in that in the screw granulator, the spacing between the nozzle plate and the vertically cut screw end is between 0.1 and 1.0 mm, the compression ratio $K_D$ being between 1 : 4.5 and 1 : 2.5 and the ratio of nozzle channel length to diameter being between 2 and 5.

8. A process according to claims 6 and 7, characterised in that the specific granulation work is from 5 to 30 Wh/kg.

9. A process according to claims 6 to 8, characterised in that the pulverulent rubber chemicals are mixed with from 5 to 50 % by weight of moistening agent and/or from 0 to 5 % by weight of lubricant, based on the solid substance portion.

10. A process according to claims 6 to 8, characterised in that the pulverulent rubber chemical is mixed with from 10 to 40 % by weight of moistening agent and from 0 to 2 % by weight of lubricant, based on the solid substance portion.

**Revendications**

1. Agglomérats granulés de produits chimiques caoutchouteux pulvérulents d'une granularité primaire de 500 μm au maximum, d'une teneur en matières actives d'au moins 90 % en poids et d'une évaluation a) de l'essai d'immixtion de 1,5 au maximum, b) de la fraction de poussière de 10 au maximum, c) de la fraction de fines de 5 au maximum et d) de l'essai de chute de 70 au maximum.

2. Agglomérats granulés selon la revendication 1, d'une granularité primaire de 300 μm au maximum.

3. Agglomérats granulés selon l'une quelconque des revendications 1 et 2, d'une teneur en matières actives d'au moins 95 % en poids.

4. Agglomérats granulés selon l'une quelconque des revendications 1 à 3, dont l'évaluation a) de l'essai d'immixtion est de 0-1 au maximum, b) de la fraction de poussière est de 5 au maximum, c) de la fraction de fines est de 3 au maximum et d) de l'essai de chute est de 50 au maximum.

5. Agglomérats granulés selon l'une quelconque des revendications 1 à 6, d'un diamètre de 1 à 6 mm.

6. Procédé de fabrication d'agglomérats granulés selon l'une quelconque des revendications 1 à 5, caractérisé en ce que les produits chimiques caoutchouteux pulvérulents d'une granularité primaire de 500 μm au maximum sont additionnés d'un agent humectant et/ou d'un lubrifiant et sont amenés à un granulateur à vis sans fin à deux arbres et à circulation forcée, dans lequel la distance entre le corps de filière et l'extrémité de la vis sans fin coupée verticalement s'élève à 0-1,6 mm, le rapport de compression $K_D$ se situant entre 1/6 et 1/1,5 et le rapport de la longueur du cône d'écoulement au diamètre de ce dernier atteignant 1-6 et le travail de granulation spécifique se montant à 2-40 Wh/kg ; et en ce que les produits chimiques caoutchouteux sont pressés axialement à travers une plaque perforée de filière, les boudins sortants sont coupés ou se laissent briser et sont ensuite séchés.

7. Procédé selon la revendication 6, caractérisé en ce que, dans le granulateur à vis sans fin, la distance entre le corps de filière et l'extrémité de la vis sans fin coupée verticalement est de l'ordre de 0,1 à 1,0 mm, le rapport de compression $K_D$ se situant entre 1/4,5 et 1/2,5 et le rapport de la longueur du cône d'écoulement au diamètre s'élevant entre 2 et 5.

8. Procédé selon l'une quelconque des revendications 6 et 7, caractérisé en ce que le travail de granulation spécifique se monte à 5-30 Wh/kg.

9. Procédé selon l'une quelconque des revendications 6 à 8, caractérisé en ce que les produits chimiques caoutchouteux pulvérulents sont additionnés de 5 à 50 % en poids d'agent humectant et/ou de 0 à 5 % en poids de lubrifiant, rapporté à la fraction de matières solides.

10. Procédé selon l'une quelconque des revendications 6 à 8, caractérisé en ce que les produits chimiques caoutchouteux pulvérulents sont additionnés de 10 à 40 % en poids d'agent humectant et de 0 à 2 % en poids de lubrifiant, rapporté à la fraction de matières solides.

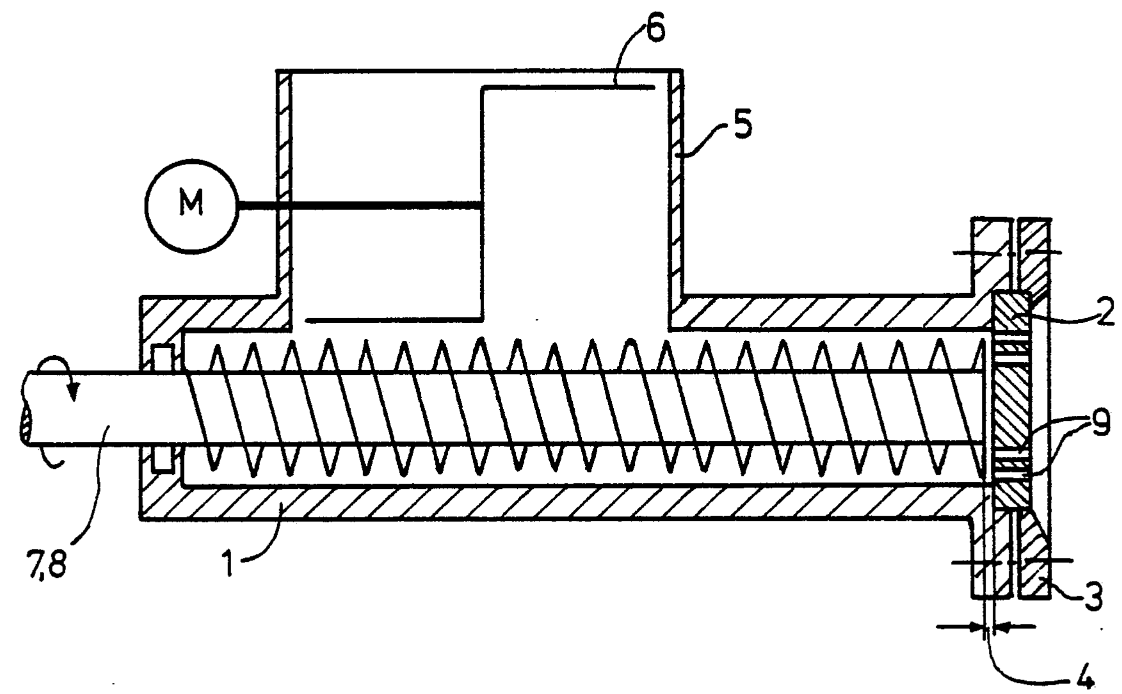


FIG. 1

Diagramm 1

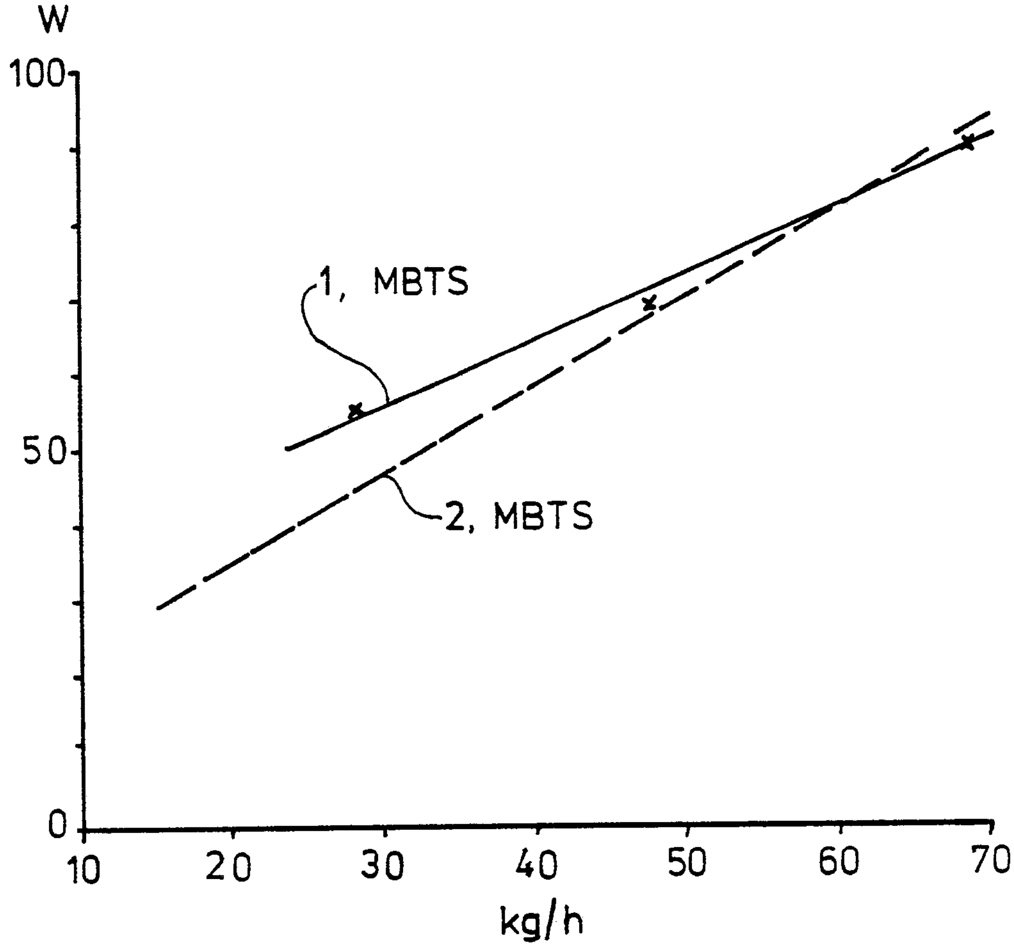

Diagramm 2

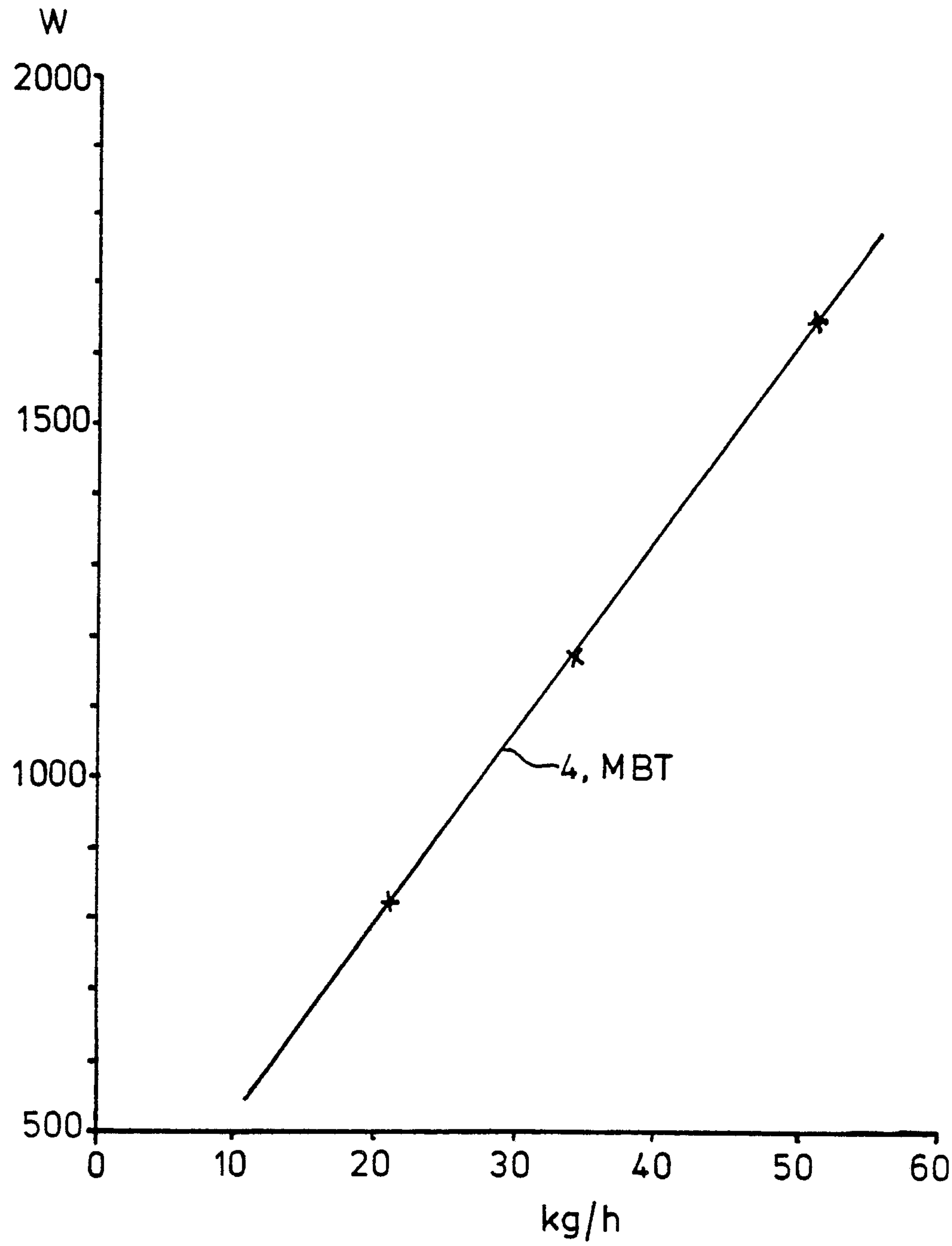

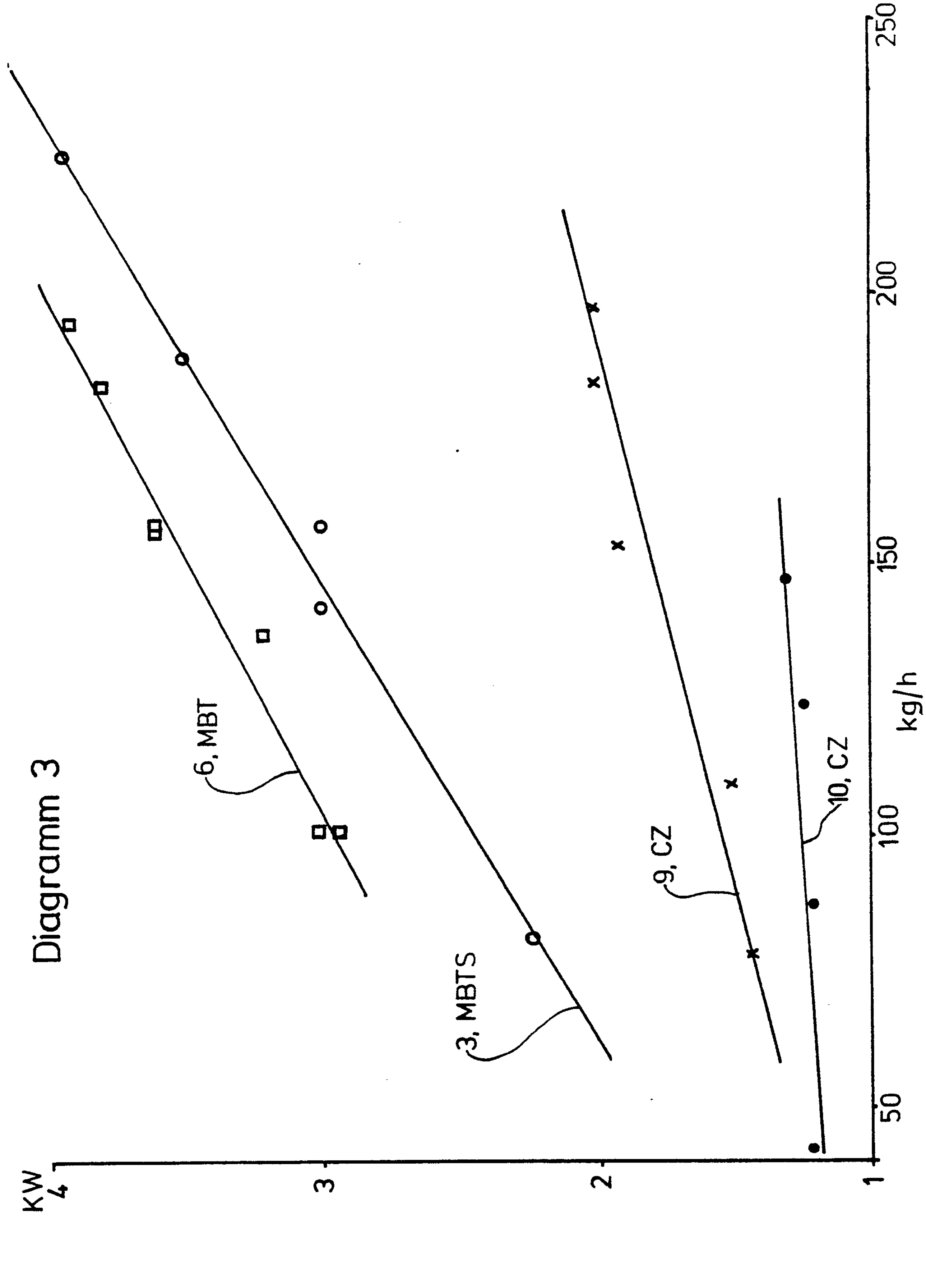
Diagramm 3
KW
4
3
2
1
50
100
150
200
250
kg/h
6, MBT
3, MBTS
9, CZ
10, CZ

# Diagramm 4

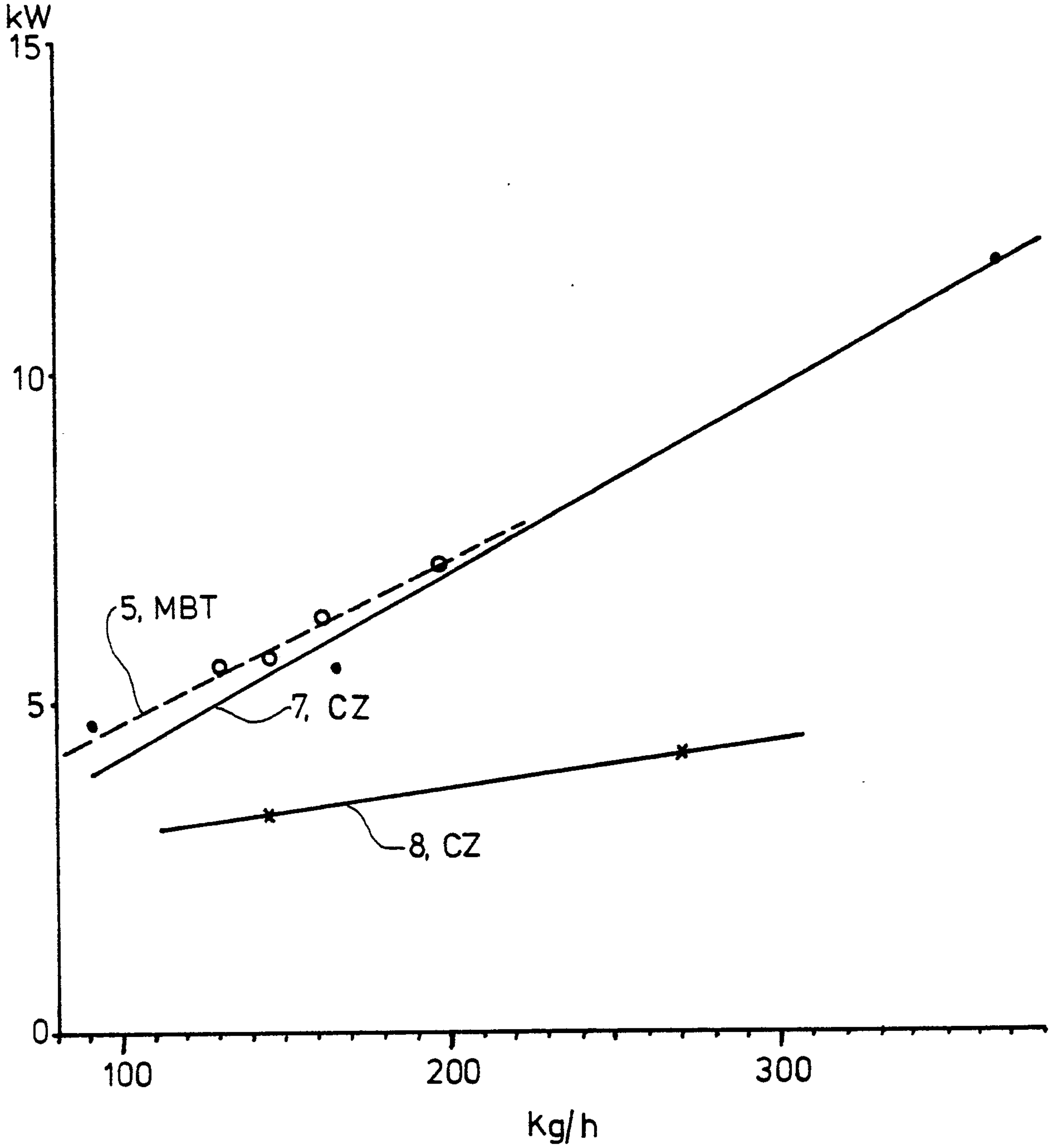

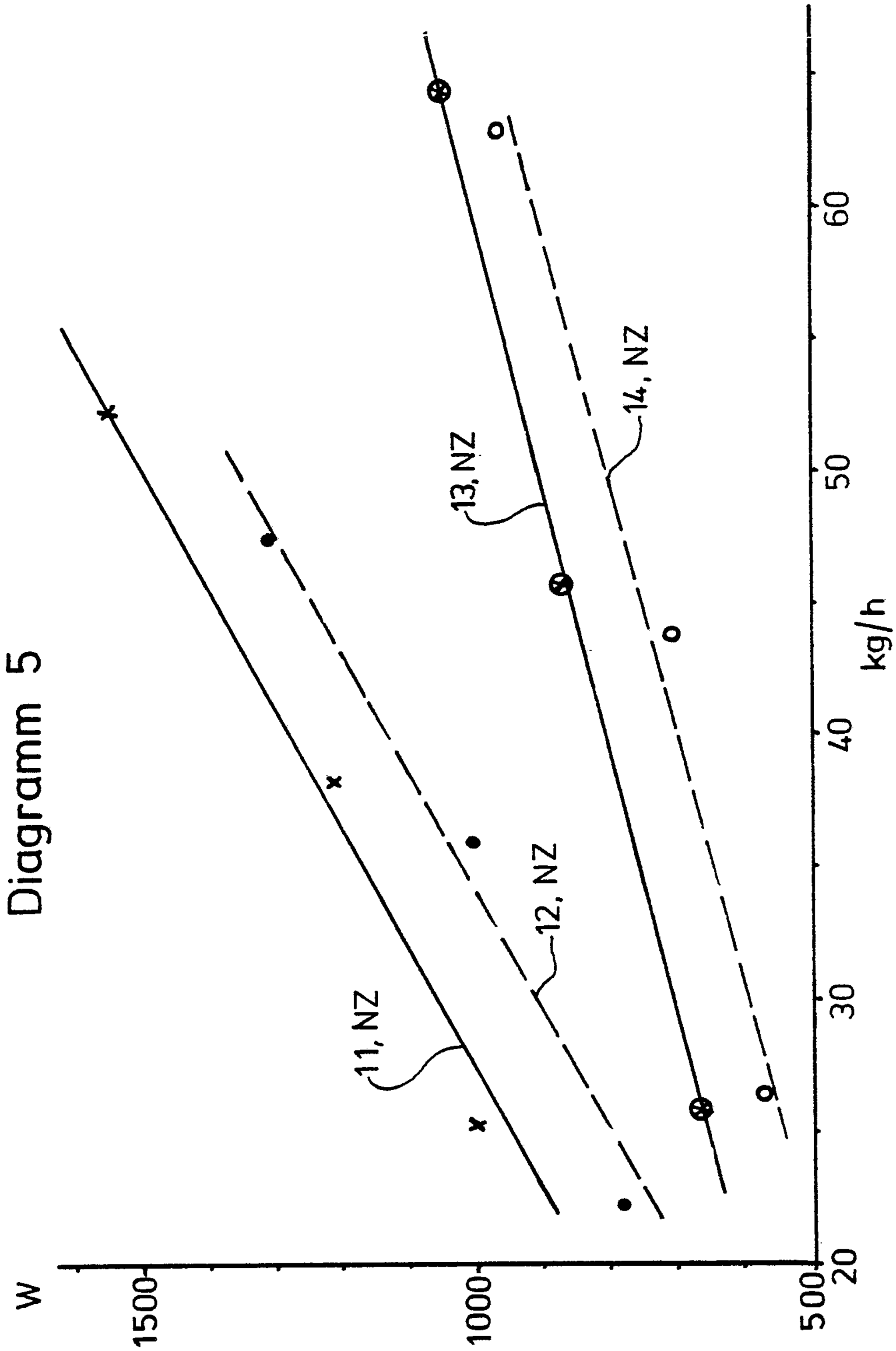
Diagramm 5
W
1500
1000
500
20
30
40
50
60
kg/h
11, NZ
12, NZ
13,NZ
14, NZ

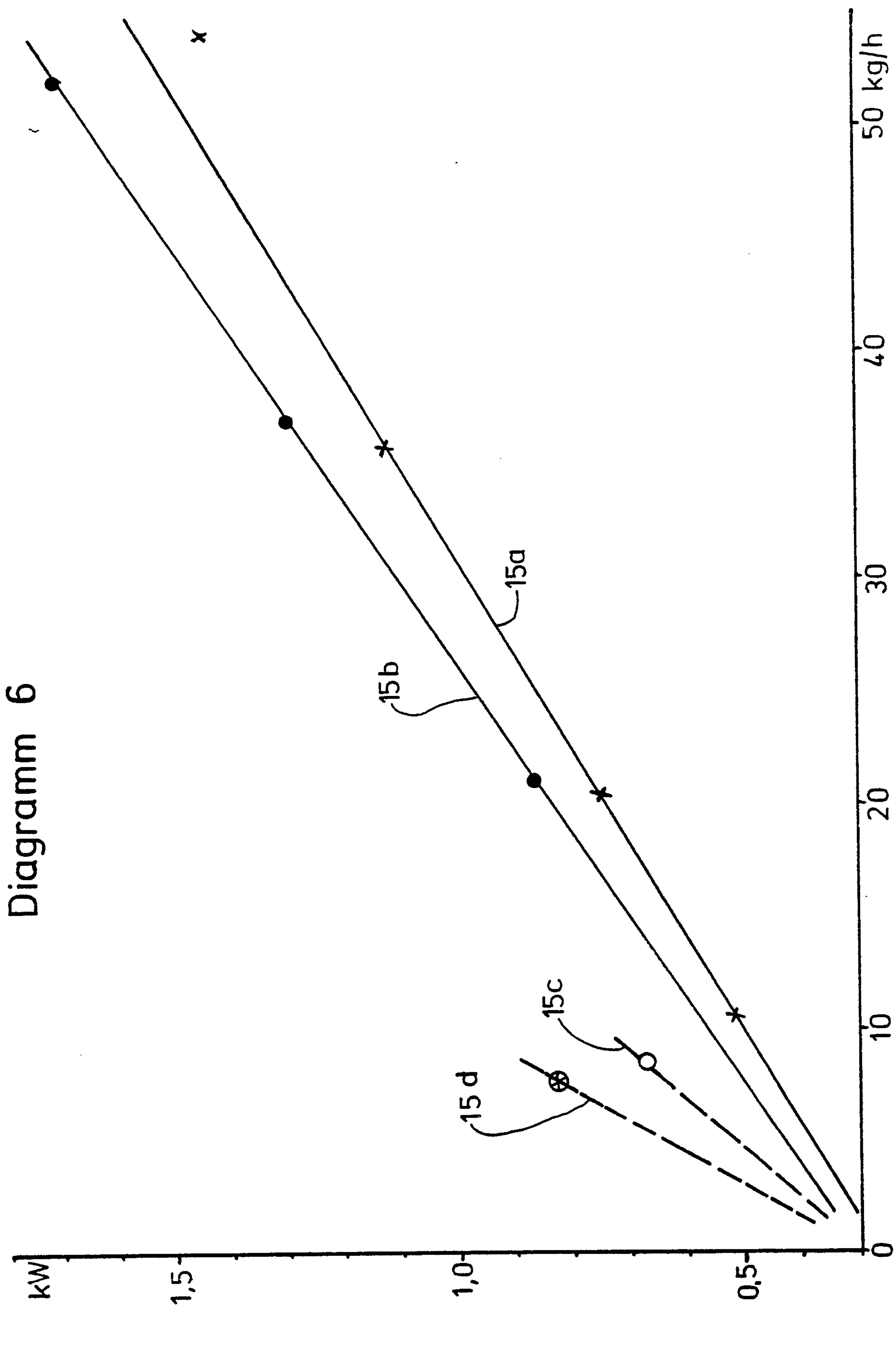
Diagramm 6
kW
1,5
1,0
0,5
0
10
20
30
40
50 kg/h
15a
15b
15c
15 d

Diagramm 7

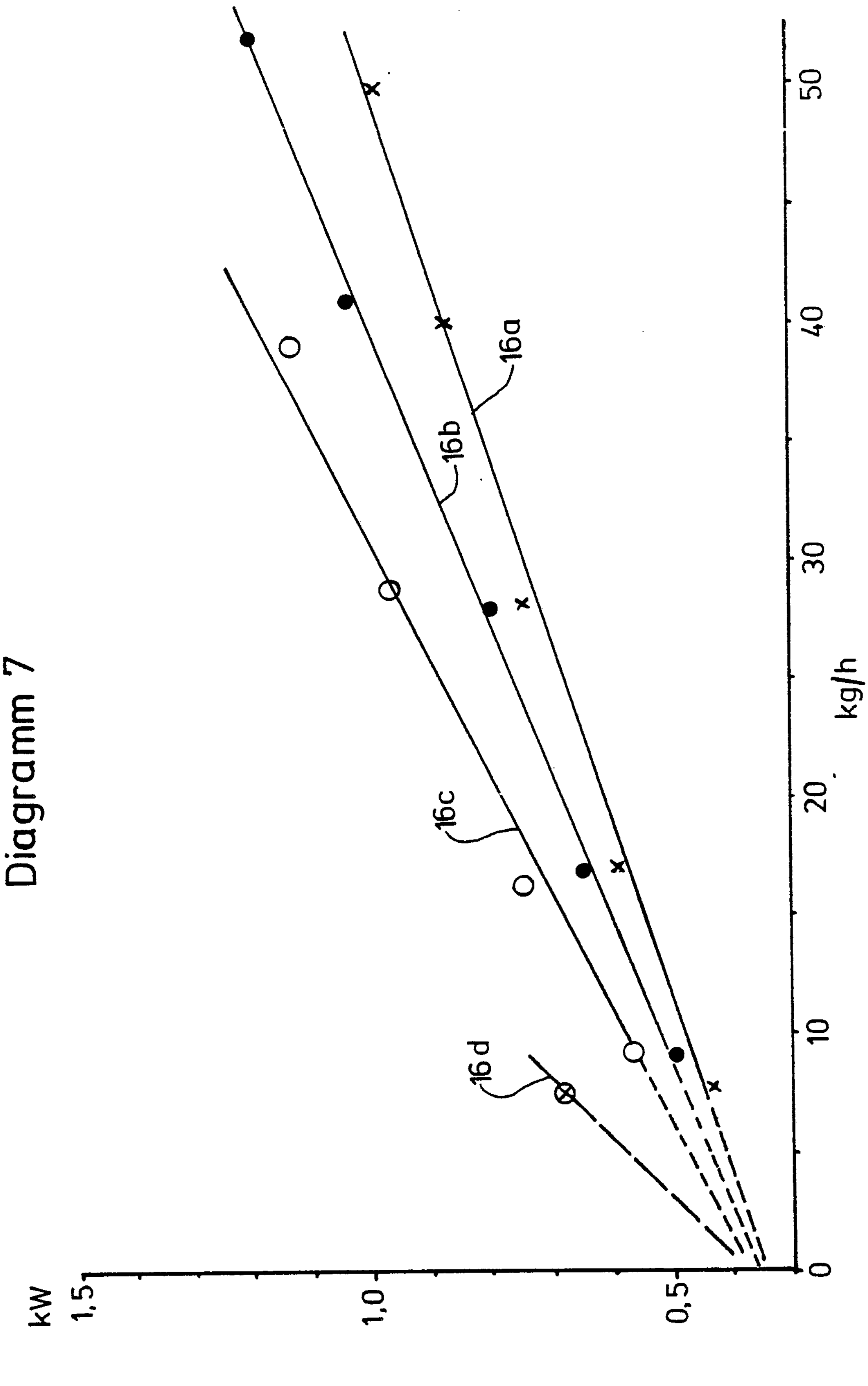

# Diagramm 8

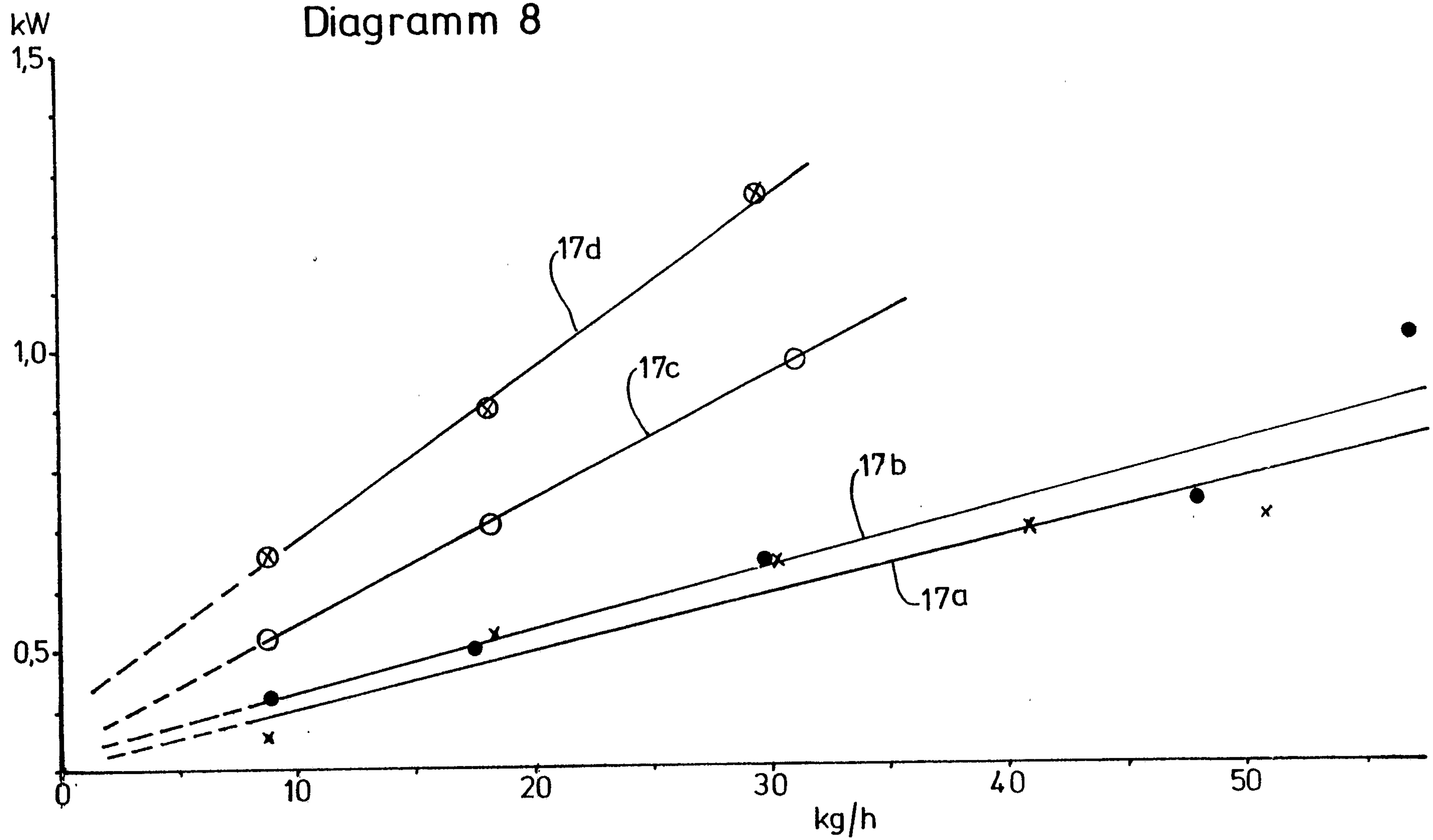

Diagramm 9

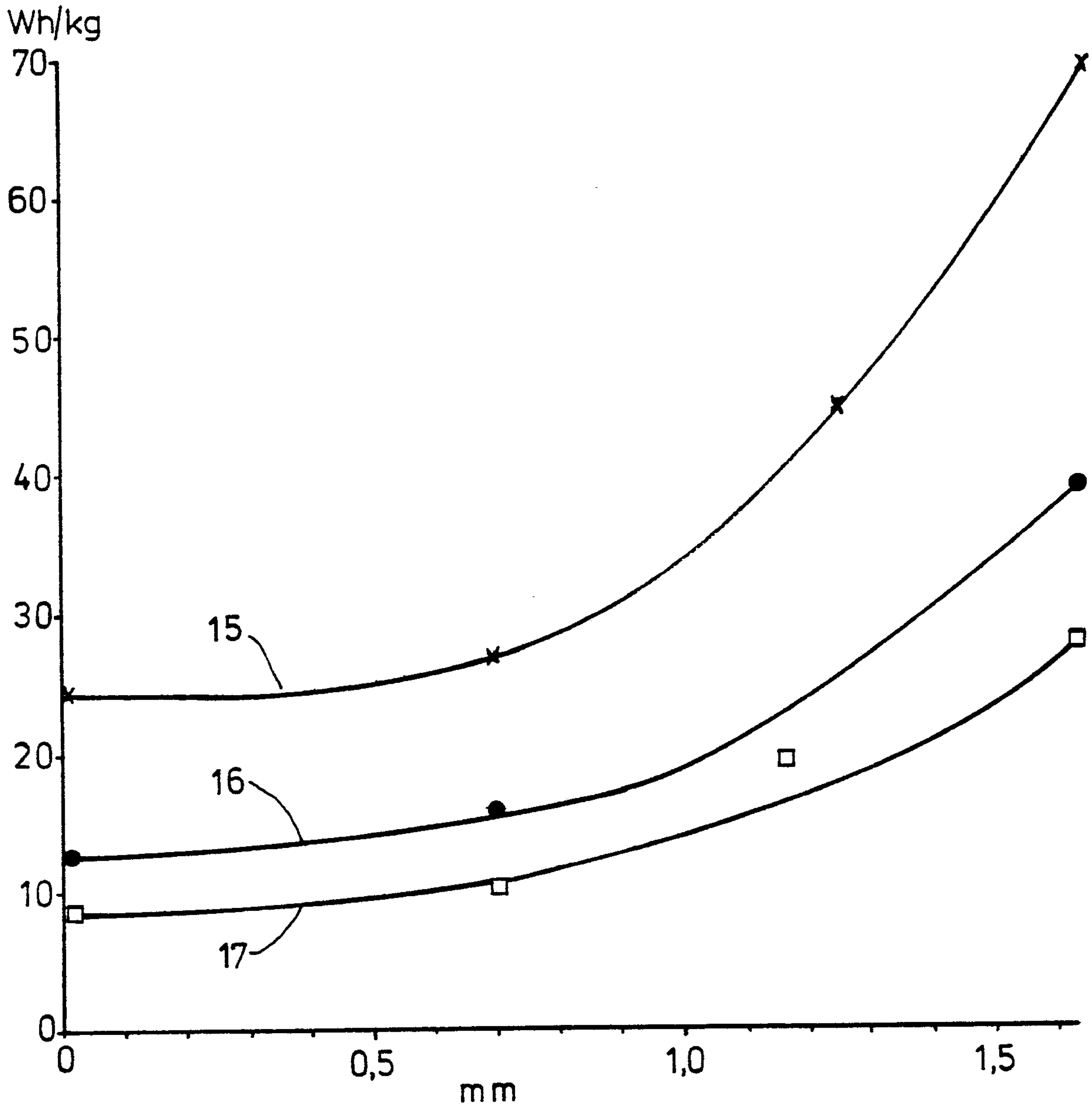

Diagramm 10

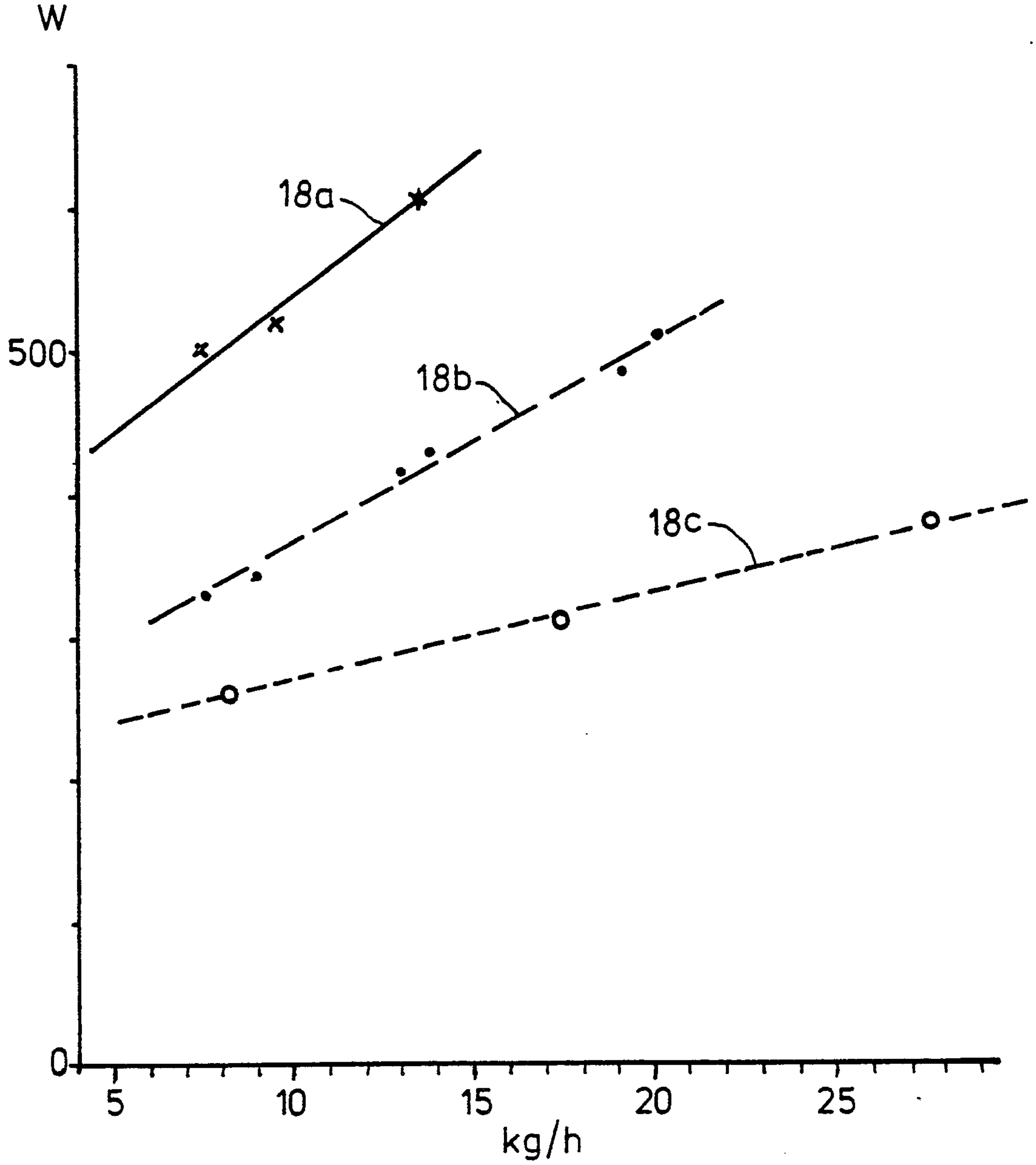

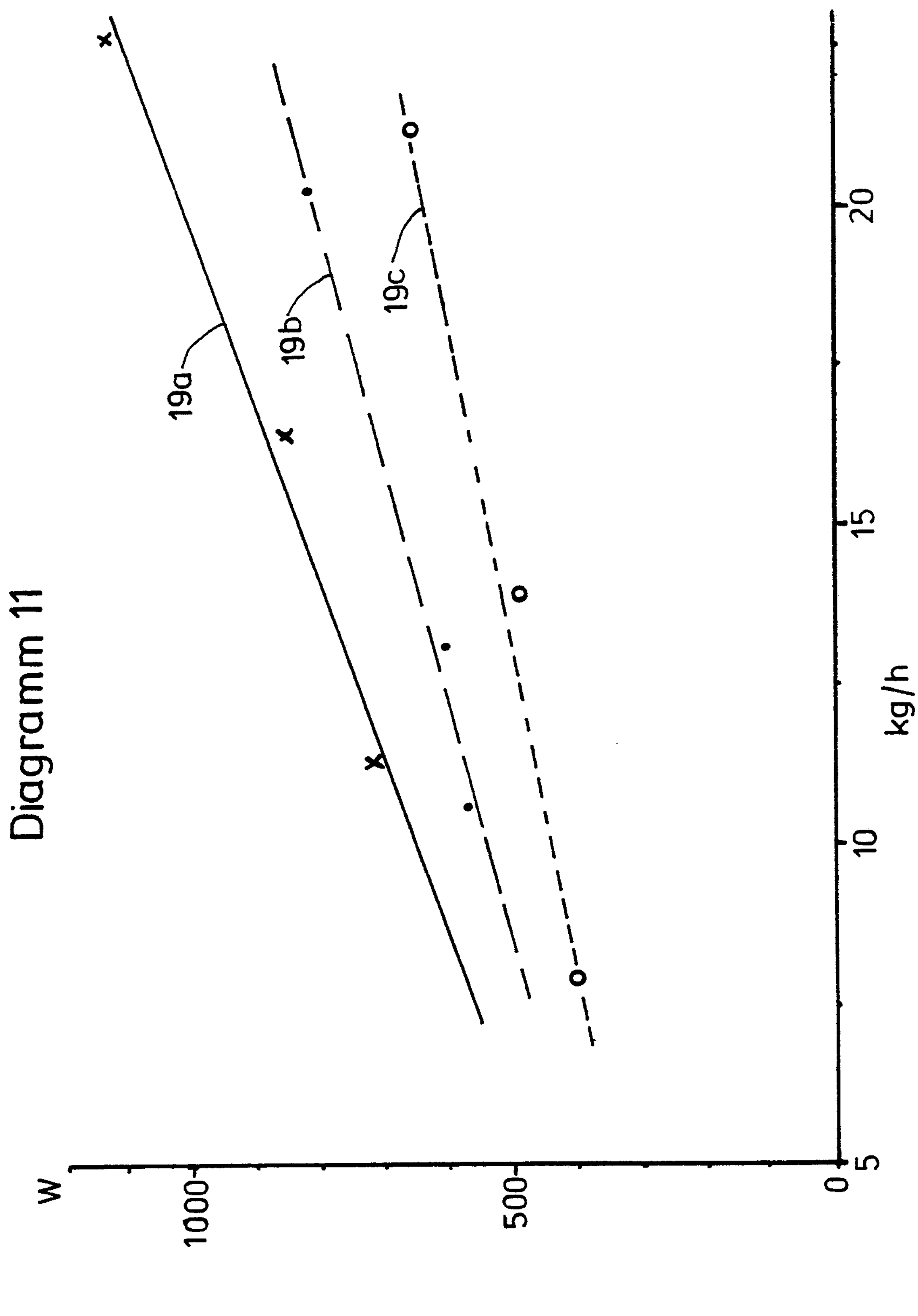


Diagramm 11

Diagramm 12

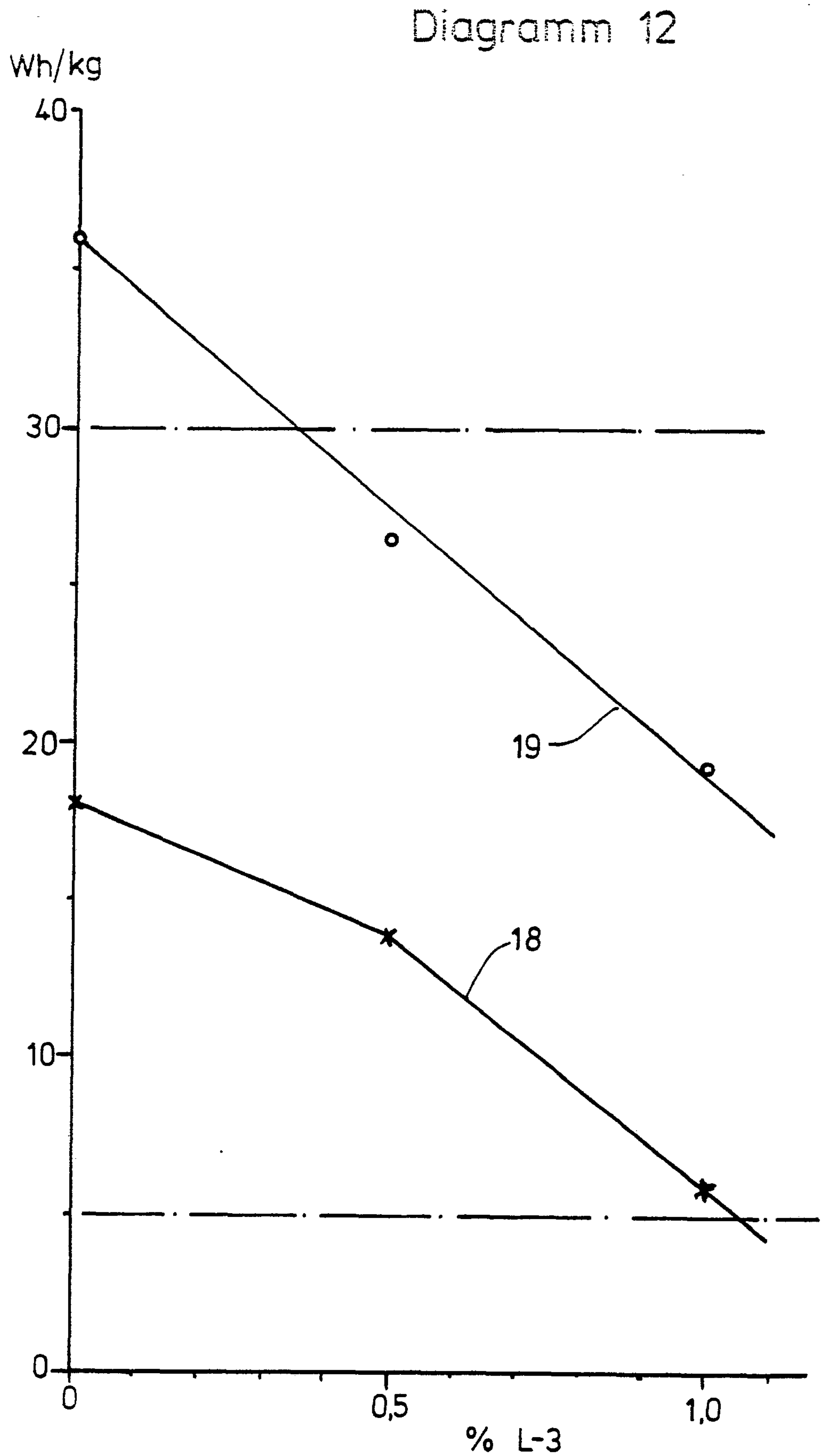

Diagramm 13

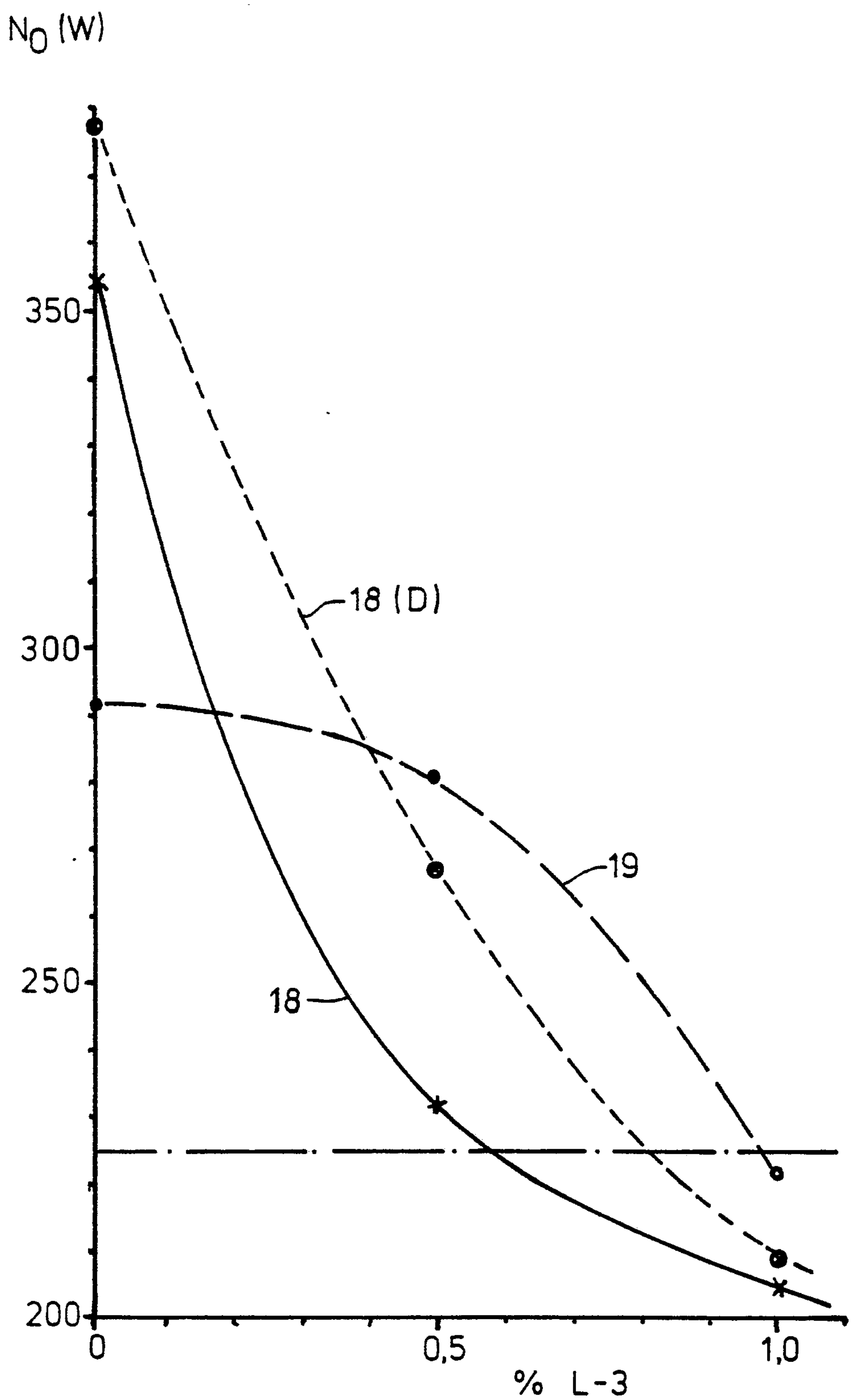

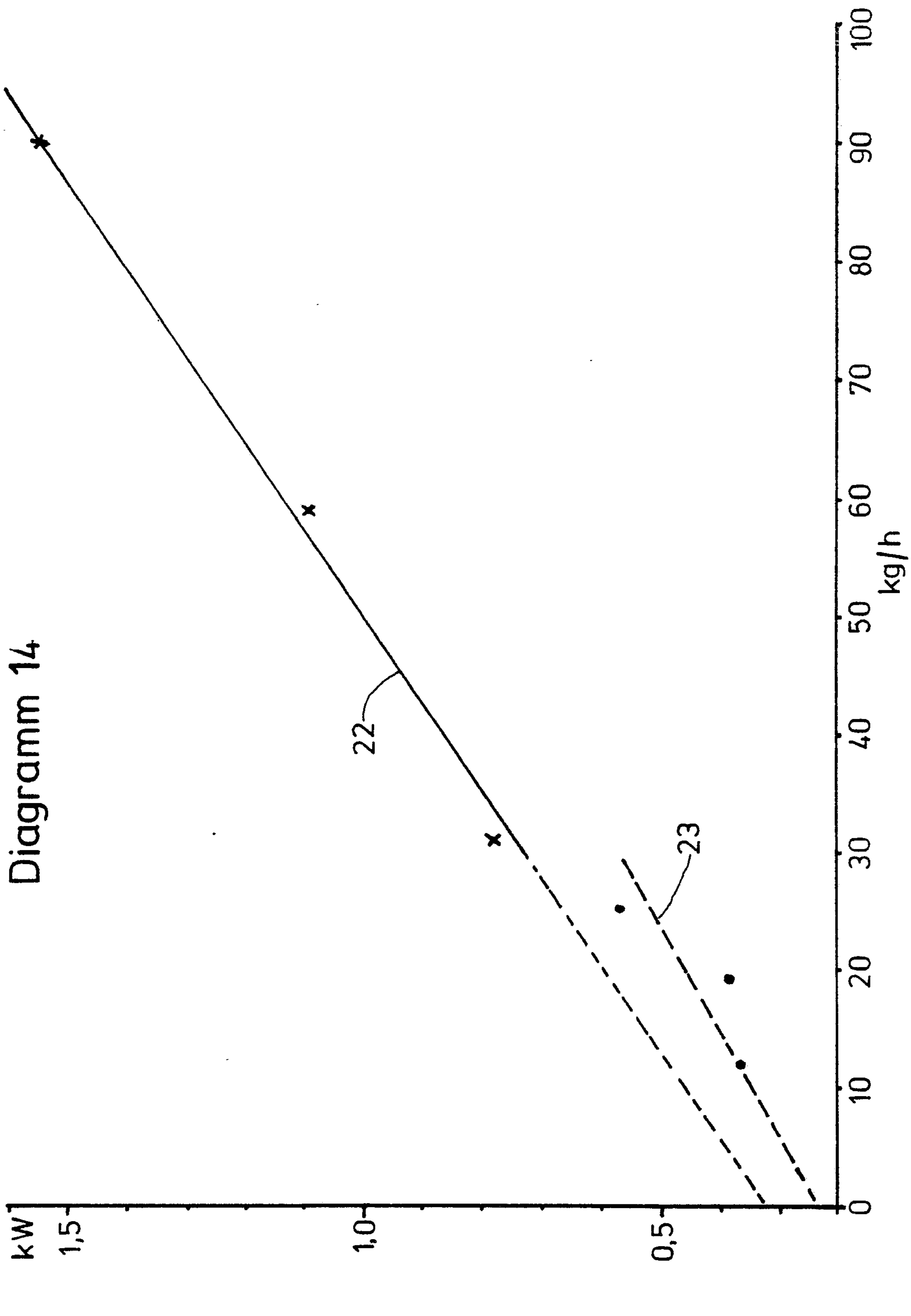
Diagramm 14
kW
1,5
1,0
0,5
0
10
20
30
40
50
60
70
80
90
100
kg/h
22
23

Diagramm 15